(19) Europäisches Patentamt
European Patent Office
Office européen des brevets

(11) **EP 2 787 681 B1**

(12) **EUROPEAN PATENT SPECIFICATION**

(45) Date of publication and mention
of the grant of the patent:
**12.10.2016 Bulletin 2016/41**

(51) Int Cl.:
*H04L 9/30* (2006.01)      *G09C 1/00* (2006.01)

(21) Application number: **11876549.4**

(22) Date of filing: **30.11.2011**

(86) International application number:
**PCT/JP2011/077623**

(87) International publication number:
**WO 2013/080320 (06.06.2013 Gazette 2013/23)**

(54) **DATA PROCESSING DEVICE, DATA PROCESSING METHOD, AND PROGRAM**

DATENVERARBEITUNGSVORRICHTUNG, DATENVERARBEITUNGSVERFAHREN UND PROGRAMM

DISPOSITIF DE TRAITEMENT DE DONNÉES, PROCÉDÉ DE TRAITEMENT DE DONNÉES ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.10.2014 Bulletin 2014/41**

(73) Proprietor: **Mitsubishi Electric Corporation Tokyo 100-8310 (JP)**

(72) Inventors:
• **HATTORI, Mitsuhiro**
  **Tokyo 100-8310 (JP)**
• **HIRANO, Takato**
  **Tokyo 100-8310 (JP)**
• **MORI, Takumi**
  **Tokyo 100-8310 (JP)**
• **ITO, Takashi**
  **Tokyo 100-8310 (JP)**
• **MATSUDA, Nori**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
WO-A1-2006/054208      WO-A1-2011/052056
JP-A- 2008 521 025      JP-A- 2011 211 593

• TATSUAKI OKAMOTO ET AL: "Homomorphic Encryption and Signatures from Vector Decomposition", 1 September 2008 (2008-09-01), PAIRING-BASED CRYPTOGRAPHY - PAIRING 2008; [LECTURE NOTES IN COMPUTER SCIENCE], SPRINGER BERLIN HEIDELBERG, BERLIN, HEIDELBERG, PAGE(S) 57 - 74, XP019103359, ISBN: 978-3-540-85503-3 * section 1,4,5 *
• DAN BONEH ET AL: "Evaluating 2-DNF Formulas on Ciphertexts", 10 February 2005 (2005-02-10), THEORY OF CRYPTOGRAPHY : SECOND THEORY OF CRYPTOGRAPHY CONFERENCE, TCC 2005, CAMBRIDGE, MA, USA, FEBRUARY 10 - 12, 2005 ; PROCEEDINGS; [LECTURE NOTES IN COMPUTER SCIENCE], BERLIN [U.A.] : SPRINGER, BERLIN, HEIDELBERG, PAGE(S) 325 - 341, XP047029378, ISBN: 978-3-540-24573-5 * section 1-4 *
• GOLLE, P. ET AL.: 'Universal Re-encryption for Mixnets' LECTURE NOTES IN COMPUTER SCIENCE vol. 2964, 30 January 2004, pages 163 - 178, XP019002807
• BONEH, D. ET AL.: 'Evaluating 2-DNF Formulas on Ciphertexts' LECTURE NOTES IN COMPUTER SCIENCE vol. 3378, 27 January 2005, pages 325 - 341, XP047029378
• OKAMOTO, T. ET AL.: 'Homomorphic Encryption and Signatures from Vector Decomposition' LECTURE NOTES IN COMPUTER SCIENCE vol. 5209, 25 August 2008, pages 57 - 74, XP008155972

• **MITSUHIRO HATTORI ET AL.: 'Secure Biometric Authentication Using 2-DNF Homomorphic Encryption' IEICE TECHNICAL REPORT vol. 109, no. 272, 05 November 2009, pages 113 - 120, XP008171585**

## Description

### Technical Field

The present invention relates to a technique for updating encrypted data (template) that is generated based on a doubly homomorphic encryption algorithm and is used for authentication.

Doubly homomorphic encryption refers to encryption in which, unlike ordinary homomorphic encryption, a plurality of ciphertexts can be used to compute a ciphertext formed by a combination of sums and products on a finite field of original plaintexts. For example, using 2T (T is an integer of 2 or more) pieces of ciphertexts $E(x_1)$, $E(x_2)$, ..., $E(x_T)$, $E(y_1)$, $E(y_2)$, ..., and $E(y_T)$, a ciphertext $E(x_1{}^*y_1 + x_2{}^*y_2 + ... + x_T{}^*y_T)$ can be computed.

### Background Art

In recent years, biometric authentication such as fingerprint authentication or vein authentication is employed for the purpose of personal authentication such as entry/exit management of a building, log-in user authentication of a personal computer, or identity authentication at an ATM (Automated Teller Machine) in a bank.

Biometric authentication is generally performed as described below.

First, a user registers his or her biometric information as a template with a verifier.

For authentication, the user presents to the verifier his or her biometric information as authentication information. The verifier verifies the biometric information against the template.

If there is resemblance between the template and the authentication information, the user is determined to be the correct person. If there is no resemblance, the user is determined to be a different person.

Types of biometric information used in biometric authentication includes fingerprint information, vein information, iris information, palm print information, and DNA (deoxyribonucleic acid) information. These types of information are considered to be private information, and it is basically undesirable to disclose these types of information to the verifier.

Thus, as a technique for performing personal authentication with these types of information being kept secret, a number of secure verification techniques have been devised including Patent Literature 1 disclosed by the applicant of the present application (for example, Patent Literature 1, Patent Literature 2, Non-Patent Literature 1).

Specifically, in these secure verification techniques, a user registers an encrypted template with a verifier. For authentication, the user presents encrypted biometric information to the verifier, and the verifier verifies the encrypted biometric information against the encrypted template.

As a doubly homomorphic encryption algorithm that can be employed for encrypting a template and biometric information, the encryption algorithms disclosed in Non-Patent Literature 2 to 5 are available, for example.

### Citation List

#### Patent Literature

Patent Literature 1: WO11/052056
Patent Literature 2: JP 2007-293807 A

#### Non-Patent Literature

Non-Patent Literature 1: Takato Hirano, Takumi Mori, Mitsuhiro Hattori, Takashi Ito, and Nori Matsuda, "Homomorphic encryption based countermeasure against active attacks in privacy-preserving biometric authentication," IEICE Transactions, ISEC 2010-73, pp.7-14, 2011.
Non-Patent Literature 2: T. Okamoto and K. Takashima, "Homomorphic encryption and signatures from vector decomposition," Pairing 2008, Lecture Notes in Computer Science volume 5209, pp.57-74, 2008.
Non-Patent Literature 3: D. Boneh, E.-J. Goh, and K. Nissim, "Evaluating 2-DNF formulas on ciphertexts," Theory of Cryptography Conference, Lecture Notes in Computer Science, volume 3378, pp.325-341, 2005.
Non-Patent Literature 4: C. Gentry, "Fully homomorphic encryption using ideal lattices," ACM Symposium on theory of computing, pp.169-178, 2009.
Non-Patent Literature 5: D. Freeman, M. Scott, E. Teske "A taxonomy of pairing-friendly elliptic curves", Journal of Cryptology, June 2009

## Disclosure of Invention

### Technical Problem

In Patent Literature 1, the applicant of the present application disclosed a method for realizing secure verification by employing doubly homomorphic encryption such as Okamoto-Takashima homomorphic encryption (Non-Patent Literature 2) or BGN (Boneh-Goh-Nissim) encryption (Non-Patent Literature 3), the method being intended for a verification scheme using feature vectors.

To be prepared for a case where an encrypted template stored by a verifier is leaked, it is necessary to securely update the encrypted template. However, Patent Literature 1 does not disclose a method for updating an encrypted template.

Also intended for the verification scheme using feature vectors, Non-Patent Literature 1 discloses a method for realizing secure verification by employing doubly homomorphic encryption such as the Okamoto-Takashima encryption or the BGN encryption, and for preventing replay attacks by introducing a technique adapted from the concept of challenge response.

However, a method for securely updating a template is not disclosed.

Patent Literature 2 discloses a method for securely updating a template which is intended for a verification scheme using images.

Since a method for keeping information secret is specifically designed for images, however, it is a problem that application is limited to the verification scheme using images.

The present invention was made in view of these points, and primarily aims to securely update encrypted data (template) that is generated based on a doubly homomorphic encryption algorithm and is used for authentication.

### Solution to Problem

A data processing device according to the present invention includes
a public key storage part that stores a public key generated based on a doubly homomorphic encryption algorithm;
an encrypted data storage part that stores first data encrypted by using the public key as encrypted first data;
a random number generating part that generates a random number by using at least a part of the public key; and
an encrypted data updating part that performs an arithmetic operation using the random number generated by the random number generating part and updates the encrypted first data.

### Advantageous Effects of Invention

According to the present invention, encrypted data can be updated. Thus, even if the encrypted data is leaked, "impersonation" using the leaked encrypted data can be effectively countered and security strength can be enhanced.

### Brief Description of Drawings

Fig. 1 is a diagram showing an example of a configuration of a biometric authentication system according to Embodiment 1;
Fig. 2 is a diagram showing an example of a configuration of a certification device according to Embodiment 1;
Fig. 3 is a diagram showing an example of a configuration of an authentication device according to Embodiment 1;
Fig. 4 is a diagram showing an example of a configuration of a decryption device according to Embodiment 1;
Fig. 5 is a flowchart showing an example of a template updating process according to Embodiment 1;
Fig. 6 is a flowchart showing an example of a template updating process according to Embodiment 2;
Fig. 7 is a flowchart showing an example of a countermeasure against replay attacks according to Embodiment 3;
Fig. 8 is a flowchart showing an example of a countermeasure against replay attacks according to Embodiment 4;
Fig. 9 is a flowchart showing an example of a setup process according to Embodiment 5;
Fig. 10 is a flowchart showing an example of a biometric information registration process according to Embodiment 5;
Fig. 11 is a flowchart showing an example of an authentication process according to Embodiment 5;
Fig. 12 is a flowchart showing an example of the authentication process according to Embodiment 5;
Fig. 13 is a flowchart showing an example of the authentication process according to Embodiment 5;
Fig. 14 is a flowchart showing an example of a setup process according to Embodiment 6;
Fig. 15 is a flowchart showing an example of a biometric information registration process according to Embodiment 6;
Fig. 16 is a flowchart showing an example of an authentication process according to Embodiment 6;

Fig. 17 is a flowchart showing an example of the authentication process according to Embodiment 6;

Fig. 18 is a flowchart showing an example of the authentication process according to Embodiment 6;

Fig. 19 is a flowchart showing an outline of the setup process according to Embodiments 5 and 6;

Fig. 20 is a flowchart showing an outline of the biometric information registration process according to Embodiments 5 and 6;

Fig. 21 is a flowchart showing an outline of the authentication process according to Embodiments 5 and 6;

Fig. 22 is a flowchart showing an outline of the authentication process according to Embodiments 5 and 6; and

Fig. 23 is a diagram showing an example of a hardware configuration of the certification device, the authentication device, and the decryption device according to Embodiments 1 to 6.

## Description of Preferred Embodiments

The present specification discloses a method for securely updating a template, the method being related to a verification scheme using feature vectors.

The present specification also discloses a method for preventing a replay attack by applying the method for securely updating a template.

Basically, the present specification newly discloses a method for securely updating a template in the data processing device according to Patent Literature 1 disclosed by the applicant of the present application. The method can be applied to the authentication method that "performs biometric authentication using the Hamming distance or Euclidean squared distance between feature vectors" described in Embodiments 2 and 4 of Patent Literature 1.

In the present specification, therefore, a method for updating a template in the scheme according to Embodiment 2 of Patent Literature 1 will be described in Embodiment 1, and a method for updating a template in the scheme according to Embodiment 4 of Patent Literature 1 will be described in Embodiment 2.

Further, a method for implementing a countermeasure against replay attacks, which is an application of template updating, will be described in Embodiments 3 and 4.

To supplement the description of Embodiments 1 and 3, a summary of the authentication method according to Embodiment 2 of Patent Literature 1 on which the methods of Embodiments 1 and 3 are based will be presented as Embodiment 5.

To supplement the description of Embodiments 2 and 4, a summary of the authentication method according to Embodiment 4 of Patent Literature 1 on which the methods of Embodiments 2 and 4 are based will be presented as Embodiment 6.

The Okamoto-Takashima encryption algorithm of Non-Patent Literature 1 will be explained hereinafter by focusing on a scope necessary for Embodiments 1 and 3 of the present specification.

The Okamoto-Takashima encryption is doubly homomorphic encryption that employs dual pairing vector spaces defined by using an elliptic curve.

A plurality of methods may be available for constituting the dual pairing vector spaces. The explanation herein will be based on a method that uses a direct product of an elliptic curve to constitute the dual pairing vector spaces.

Generally, an arithmetic operation on a group on an elliptic curve is often described as an arithmetic operation on an additive group. In the following explanation, however, all arithmetic operations including one on a finite field will be described as an arithmetic operation on a multiplicative group.

The arithmetic operations will be described according to a more general scheme that employs asymmetric pairing.

Assume that G, G^, and $G_T$ are groups each having a prime order q.

Assume that $F_q = \{0, 1, ..., q-1\}$.

Assume that $e : G \times G^\wedge \to G_T$ is a pairing that satisfies bilinearity (a property that $e(u^a, v^{\wedge b}) = e(u, v^\wedge)^{ab}$ is established for arbitrary $u \in G$, $v^\wedge \in G^\wedge$, $a, b \in F_q$) and non-degeneracy (a property that there exist $g \in G$ and $g^\wedge \in G^\wedge$ such that $e(g, g^\wedge) \neq 1$).

Assume that the direct product set of N pieces of groups G is $V = G \times G \times ... \times G$ and that the direct product set of N pieces of groups G^ is $V^\wedge = G^\wedge \times G^\wedge \times ... \times G^\wedge$.

At this time, the relation shown in Formula 1 is established.

[Formula 1]

For

$$\mathbf{x} = (g^{x1}, g^{x2}, \ldots, g^{xN}) \in V, \mathbf{y} = (g^{y1}, g^{y2}, \ldots, g^{yN}) \in V, \alpha \in F_q$$

let us define

$$\mathbf{x} + \mathbf{y} = (g^{x1+y1}, g^{x2+y2}, \ldots, g^{xN+yN}) \quad \text{and}$$

$$\alpha \mathbf{x} = (g^{\alpha x1}, g^{\alpha x2}, \ldots, g^{\alpha xN})$$

then, V constitutes a vector space.

Likewise, for

$$\hat{\mathbf{x}} = (\hat{g}^{x1}, \hat{g}^{x2}, \ldots, \hat{g}^{xN}) \in \hat{V}, \hat{\mathbf{y}} = (\hat{g}^{y1}, \hat{g}^{y2}, \ldots, \hat{g}^{yN}) \in \hat{V}, \alpha \in F_q$$

let us define

$$\hat{\mathbf{x}} + \hat{\mathbf{y}} = (\hat{g}^{x1+y1}, \hat{g}^{x2+y2}, \ldots, \hat{g}^{xN+yN}) \quad \text{and}$$

$$\alpha \hat{\mathbf{x}} = (\hat{g}^{\alpha x1}, \hat{g}^{\alpha x2}, \ldots, \hat{g}^{\alpha xN})$$

then, $\hat{V}$ constitutes a vector space.

Note that in the present specification, a symbol formed of a character with "^"attached above it, such as $\hat{G}, \hat{g}, \hat{v}$, is the same as a symbol formed of a character with "^" attached on its side, such as G^, g^, or v^. This applies to A^, C^, a^, c^, d^, w^, and the like to be described later.

As the pairing of two vector spaces V and V^, let us define a pairing for u = (u_1, u_2, ..., u_N) ∈ V and v^ = (v^_1, v^_2, ..., v^_N) ∈ V^ as shown in Formula 2.

[Formula 2]

$$e(\mathbf{u}, \hat{\mathbf{v}}) = \prod_{i=1}^{N} e(u_i, \hat{v}_i)$$

In the vector spaces V and V^, the relation shown in Formula 3 is established.

[Formula 3]

Assume that

$$\mathbf{a}_1 = (g,1,1,\ldots,1), \mathbf{a}_2 = (1,g,1,\ldots,1),\ldots, \mathbf{a}_N = (1,1,1,\ldots,g)$$

$$\hat{\mathbf{a}}_1 = (\hat{g},1,1,\ldots,1), \hat{\mathbf{a}}_2 = (1,\hat{g},1,\ldots,1),\ldots, \hat{\mathbf{a}}_N = (1,1,1,\ldots,\hat{g})$$

then,

$$\mathbf{A} = (\mathbf{a}_1, \mathbf{a}_2,\ldots, \mathbf{a}_N), \hat{\mathbf{A}} = (\hat{\mathbf{a}}_1, \hat{\mathbf{a}}_2,\ldots, \hat{\mathbf{a}}_N)$$

are respectively the bases of the vector spaces V and V^.    Also, **A** and **A^**

satisfy $\quad e(\mathbf{a}_i, \hat{\mathbf{a}}_j) = e(g,\hat{g})^{\delta_{i,j}}$ ,

where $\delta_{i,j}$ is a Kronecker's delta. These bases A and **A^** will be called canonical bases.

Assume that $x = x_1 a_1 + x_2 a_2 + \ldots + x_N a_N \in V$.

Let us define a distortion map $\varphi_{i,j} : V \to V$ in the vector space V as $\varphi_{i,j}(x) = x_j a_i$.

Likewise, for $x^\wedge = x_1 a^\wedge_1 + x_2 a^\wedge_2 + \ldots + x_N a^\wedge_N \in V^\wedge$, let us define $\varphi^\wedge_{i,j} : V^\wedge \to V^\wedge$ as $\varphi^\wedge_{i,j}(x^\wedge) = x_j a^\wedge_i$.

These distortion maps are easily computable.

Two vector spaces which have canonical bases and for which a pairing of the spaces is defined and computable distortion maps are defined, as described above, are called dual pairing vector spaces.

Assume that $X = (X_{i,j})$ and $X^\wedge = (X^\wedge_{i,j})$ are each an N-row, N-column square matrix whose elements are formed of values uniformly randomly selected from Fq.

X and X^ constructed in this manner will be regular matrices with a very high probability.

When it is defined as shown in Formula 4 by using such regular matrices, then $W = (w_1, w_2, \ldots, w_N)$ and $W^\wedge = (w^\wedge_1, w^\wedge_2, \ldots, w^\wedge_N)$ also become bases. These bases will be called random bases.

[Formula 4]

$$\mathbf{w}_i = \sum_{j=1}^{N} \chi_{i,j} \mathbf{a}_j, \hat{\mathbf{w}}_i = \sum_{j=1}^{N} \hat{\chi}_{i,j} \hat{\mathbf{a}}_j$$

According to Non-Patent Literature 2, concerning the random bases $W = (w_1, w_2, \ldots, w_N)$ and $W^\wedge = (w^\wedge_1, w^\wedge_2, \ldots, w^\wedge_N)$ in the vector spaces V and V^, the following property is established.

When elements $(x_1, x_2, \ldots, x_N)$ of $F^N_q$ are given, it is easy to obtain $x = x_1 w_1 + x_2 w_2 + \ldots + x_N w_N$ and $X^\wedge = x_1 w^\wedge_1 + x_2 w^\wedge_2 + \ldots + x_N w^\wedge_N$.

It is known, however, that when $x = x_1 w_1 + x_2 w_2 + \ldots + x_L w_L$ and $x^\wedge = x_1 w^\wedge_1 + x_2 w^\wedge_2 + \ldots + x_L w^\wedge_L$ ($1 < L \leqq N$) are given, obtaining vectors $y = x_1 w_1 + x_2 w_2 + \ldots + x_1 w_1$ and $y^\wedge = x_1 w^\wedge_1 + x_2 w^\wedge_2 + \ldots + x_1 w^\wedge_1$ ($1 \leqq 1 < L$) without using $X = (X_{i,j})$ and $X^\wedge = (X^\wedge_{i,j})$ is as difficult as a generalized computational Diffie-Hellman problem.

On the other hand, if $X = (X_{i,j})$ and $X^\wedge = (X^\wedge_{i,j})$ are used, vector decomposition as described above can be easily computed using an algorithm Deco (Formula 5) shown below. Note that k in Formula 5 is an integer.

[Formula 5]

$$\mathrm{Deco}(\mathbf{X}, <\mathbf{w}_1, \ldots, \mathbf{w}_l>, X):$$

$$(t_{i,j}) \leftarrow X^{-1}$$

$$\mathbf{y} \leftarrow \sum_{i=1}^{L}\sum_{j=1}^{l}\sum_{k=1}^{L} t_{i,j} x_{j,k} \phi_{k,i}(\mathbf{x})$$

$$\mathrm{Deco}(\hat{\mathbf{x}}, <\hat{\mathbf{w}}_1, \ldots, \hat{\mathbf{w}}_l>, \hat{X}):$$

$$(\hat{t}_{i,j}) \leftarrow \hat{X}^{-1}$$

$$\hat{\mathbf{y}} \leftarrow \sum_{i=1}^{L}\sum_{j=1}^{l}\sum_{k=1}^{L} \hat{t}_{i,j} \hat{\chi}_{j,k} \hat{\phi}_{k,i}(\hat{\mathbf{x}})$$

Based on this property, a trapdoor function can be realized by employing a regular matrix as a secret key.

The method for securely updating a template in a data processing device that employs dual pairing vector spaces will be described hereinafter.

Embodiment 1

This embodiment will describe the method for securely updating a template in a data processing device that encrypts feature vectors by using the Okamoto-Takashima homomorphic encryption described above and performs biometric authentication based on the Hamming distance or Euclidean squared distance between the feature vectors.

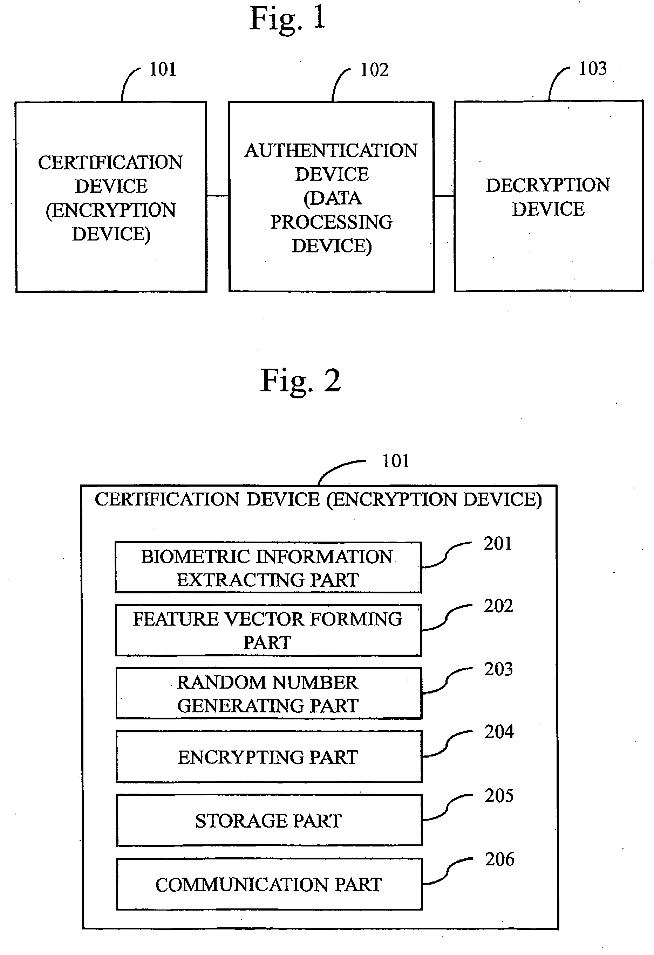

Fig. 1 is a diagram showing an example of a configuration of a biometric authentication system according to Embodiments 1 to 4.

Referring to Fig. 1, a certification device 101 is a device configured to measure biometric information of a user and perform a secure verification process using the measured biometric information.

An authentication device 102 is a device configured to encrypt the biometric information of the user, store the encrypted biometric information, and perform authentication using the encrypted biometric information that is stored.

A decryption device 103 is a device configured to decrypt encrypted similarity degree information.

The certification device 101 is an example of an encryption device, and the authentication device is an example of a data processing device.

Fig. 2 is a diagram showing an example of an internal configuration of the certification device 101.

Referring to Fig. 2, a biometric information extracting part 201 extracts information necessary for personal identification from a body by using various types of sensors such as an optical camera or an infrared camera.

A feature vector forming part 202 forms a feature vector representing the feature of an individual from the biometric information extracted by the biometric information extracting part 201.

A random number generating part 203 generates a random number.

An encrypting part 204 encrypts the feature vector.

A storage part 205 stores various types of data such as a public key.

A communication part 206 transmits and receives data to and from another device such as a database.

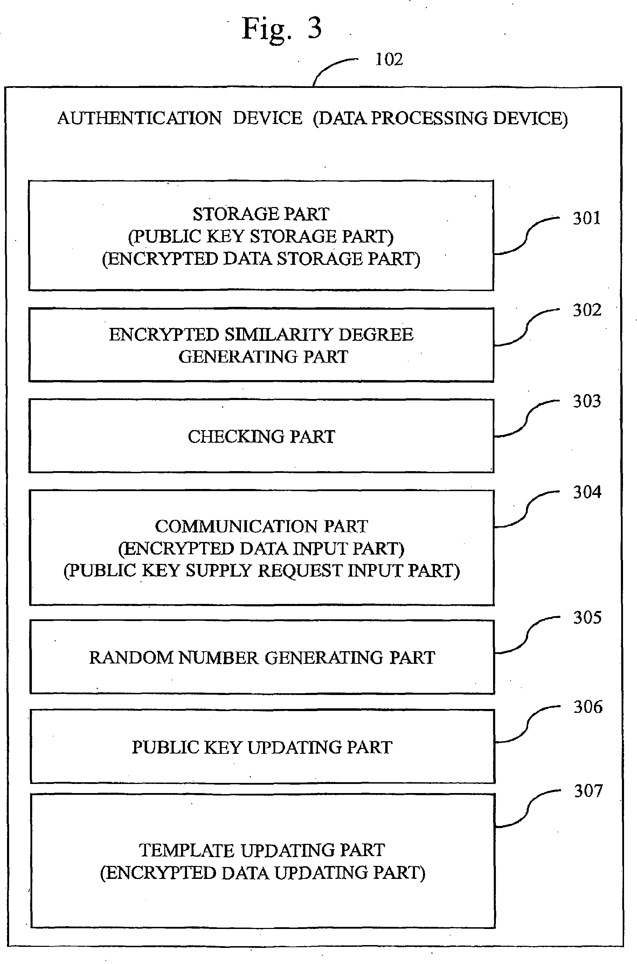

Fig. 3 is a diagram showing an example of an internal configuration of the authentication device 102.

Referring to Fig. 3, a storage part 301 stores various types of data such as a feature vector that has been encrypted (to be also referred to as an encrypted feature vector hereinafter) and the public key.

The encrypted feature vector stored by the storage part 301 is a feature vector for registration that has been encrypted by the certification device 101, and is used as a template for authentication.

In the present specification, the encrypted feature vector will also be described as a template or encrypted biometric information.

The feature vector for registration that has not been encrypted (biometric information for registration that has not been encrypted) corresponds to an example of first data, and the encrypted feature vector (template, encrypted biometric information) stored by the storage part 301 corresponds to an example of encrypted first data.

As will be described later, when the encrypted feature vector is updated by a template updating part 307, the storage part 301 overwrites the existing encrypted feature vector (encrypted feature vector obtained from the certification device 101 or encrypted feature vector obtained through the previous update) to store the updated encrypted feature vector.

The public key stored by the storage part 301 is a public key generated in the decryption device 103 and distributed by the decryption device 103.

As will be described later, when the public key is updated by a public key updating part 306, the existing public key (public key obtained from the decryption device 103 or public key obtained through the previous update) is overwritten to store the updated public key.

The storage part 301 corresponds to an example of an encrypted data storage part and a public key storage part.

An encrypted similarity degree generating part 302 generates encrypted similarity degree information from an encrypted feature vector that has been registered and an encrypted feature vector for authentication.

The encrypted feature vector for authentication is a feature vector for authentication that has been encrypted by the certification device 101.

The feature vector for authentication that has not been encrypted corresponds to an example of second data, and the encrypted feature vector for authentication corresponds to an example of encrypted second data.

The encrypted similarity degree information is encrypted information from which the similarity degree between the feature vector for registration (first data) and the feature vector for authentication (second data) can be derived in the decryption device 103 in accordance with a decryption process using a secret key corresponding to the public key.

The encrypted similarity degree generating part 302 will be described in detail in Embodiments 5 and 6 to be described later.

A checking part 303 performs personal identification based on the similarity degree and checks whether or not the user is the correct person.

A communication part 304 transmits and receives data to and from the certification device 101 and the decryption device 103.

For example, at the time of authentication, the communication part 304 receives the encrypted feature vector for authentication from the certification device 101.

As described above, the encrypted feature vector corresponds to an example of the encrypted second data. Thus, the communication part 304 corresponds to an example of an encrypted data input part.

The communication part 304 may receive an authentication request from the certification device 101, as will be presented in Embodiments 3 and 4 to be described later.

An authentication request is transmitted from the certification device 101 to the authentication device 102 when, for example, a user needs to be authenticated.

For example, in a case where the certification device 101 is installed in an ATM in a bank, an authentication request is transmitted from the certification device 101 to the authentication device 102 when a bank customer starts using the ATM.

As will be described later, when an authentication request is made from the certification device 101, the public key is updated by the public key updating part 306 in the authentication device 102 and the updated public key is transmitted to the certification device 101.

In this sense, the authentication request is a request for supply of the public key and the authentication request corresponds to an example of a public key supply request.

Thus, the communication part 304 is also an example of a public key supply request input part.

A random number generating part 305 generates a random number.

More specifically, each time a predetermined trigger event occurs, the random number generating part 305 generates a random number using at least a part of the public key stored in the storage part 301 at occurrence of the trigger event.

For example, a trigger event may be receipt of an authentication request from the certification device 101, or arrival of periodic update timing of the public key or the encrypted feature vector.

Alternatively, a trigger event may be an instruction by a system administrator to the authentication device 102 to update the public key or the encrypted feature vector.

Each time a random number is generated by the random number generating part 305, the public key updating part 306 performs an arithmetic operation using the random number generated by the random number generating part 305, and updates the public key stored in the storage part 301 at occurrence of the trigger event.

Each time a random number is generated by the random number generating part 305, the template updating part 307 performs an arithmetic operation using the random number generated by the random number generating part 305, and updates the template (encrypted first data) stored in the storage part 301 at occurrence of the trigger event.

The template updating part 307 corresponds to an example of an encrypted data updating part.

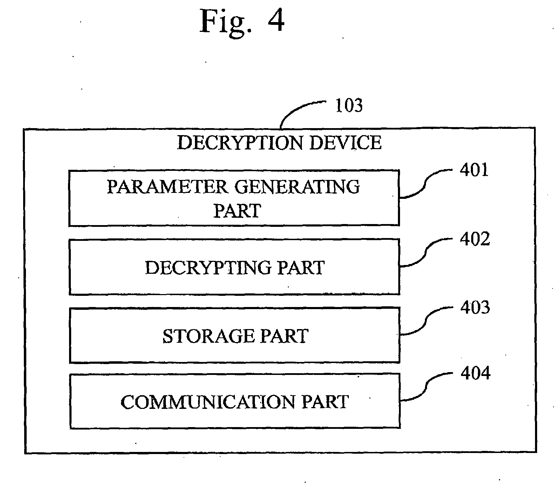

Fig. 4 is a diagram showing an example of an internal configuration of the decryption device 103.

Referring to Fig. 4, a parameter generating part 401 generates parameters such as a public key and a secret key which are necessary for encryption and decryption.

A decrypting part 402 decrypts encrypted similarity degree information to obtain a plaintext similarity degree.

A storage part 403 stores various types of data such as the public key and the secret key.

A communication part 404 transmits and receives data to and from another device such as a database.

A data processing method according to this embodiment will now be described.

An overview of operation will be described first.

The operation is divided into four parts: a setup process, a registration process, an authentication process, and a template updating process.

In the setup process, the decryption device 103 generates parameters necessary for encryption and decryption.

In the registration process, the certification device 101 encrypts biometric information of the user and transmits encrypted biometric information to the authentication device 102. The authentication device 102 stores the encrypted biometric information in the storage part 301.

In the authentication process, first of all, the certification device 101 encrypts biometric information of the user and transmits encrypted biometric information for authentication to the authentication device 102. Then, using the encrypted biometric information (template) in the storage part 301 and the encrypted biometric information received, the authentication device 102 generates encrypted similarity degree information and transmits the encrypted similarity degree information to the decryption device 103. Then, the decryption device 103 decrypts the similarity degree and transmits the decrypted similarity degree to the authentication device 102. Finally, the authentication device 102 compares the similarity degree with a threshold and performs authentication.

In the template updating process, the authentication device 102 updates the public key and the template and makes the new public key public.

In the present specification, the setup process, the registration process, and the authentication process are as described in Patent Literature 1 including the symbols.

The setup process, the registration process, and the authentication process will be described in detail in Embodiment 5. In Embodiment 1, only the template updating process will be described.

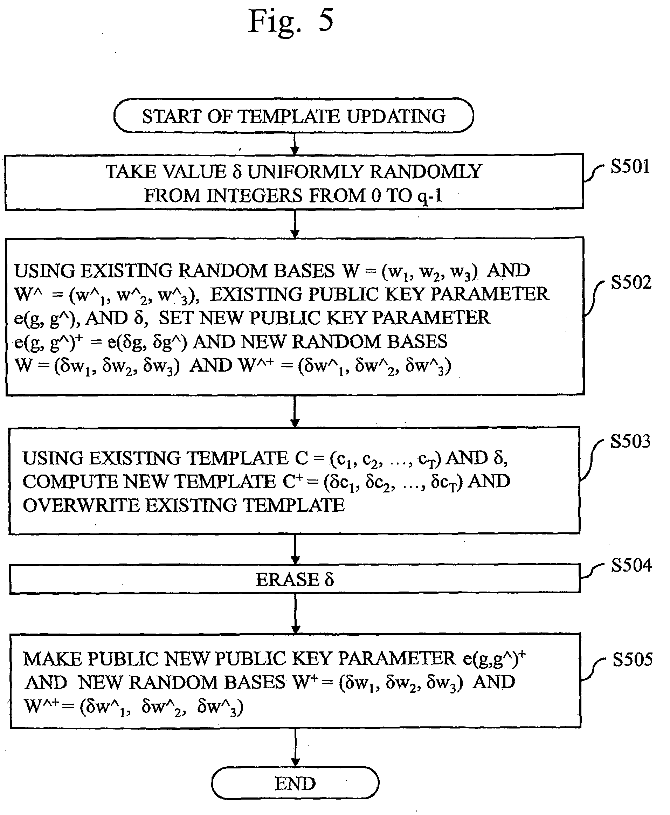

Referring to Fig. 5, the template updating process will be described in detail.

Fig. 5 is a flowchart showing a procedure for updating a template.

When a trigger event occurs, first in step S501, the random number generating part 305 takes a value $\delta$ uniformly randomly from integers from 0 to q-1.

The value $\delta$ is a random number value.

The term "uniformly" above means that each of values 0 to q-1 occurs with the same probability.

The "q" described above is a group order.

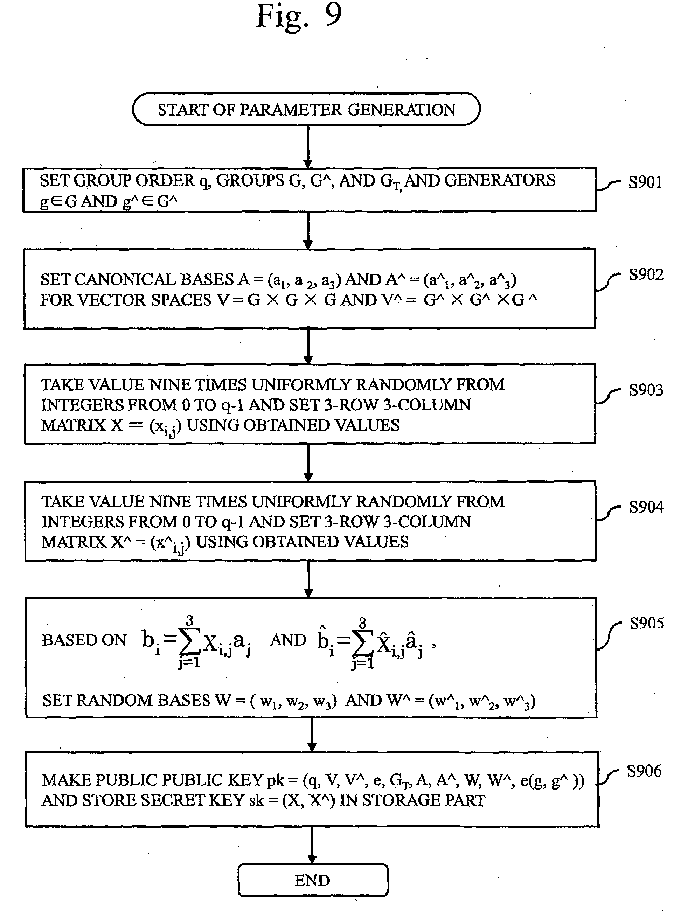

As shown in S906 of Fig. 9 to be described in Embodiment 5, a public key pk = (q, V, V^, e, $G_\Upsilon$, A, A^, W, W^, e(g, g^)), so that the group order q is a part (element) of the public key pk.

That is, the random number generating part 305 generates a random number using a part of the public key pk.

In step S502, using an existing public key parameter e(g, g^), existing random bases W = ($w_1$, $w_2$, $w_3$) and W^ = ($w\text{^}_1$, $w\text{^}_2$, $w\text{^}_3$), and the random number value $\delta$, the public key updating part 306 sets a new public key parameter e(g, g^)$^+$ = e($\delta$g, $\delta$g^) and new random bases W$^+$ = ($\delta w_1$, $\delta w_2$, $\delta w_3$) and W^$^+$ = ($\delta w\text{^}_1$, $\delta w\text{^}_2$, $\delta w\text{^}_3$).

As described above, the public key pk = (q, V, V^, e, $G_T$, A, A^, W, W^, e(g, g^)), so that each of the public key parameter e(g, g^) and the random bases W and W^ is a part of the public key pk.

Thus, updating the existing public key parameter e(g, g^) and the existing random bases W and W^ to the new public parameter e(g, g^)$^+$ and the new random bases W$^+$ and W^$^+$ is synonymous with updating the existing public key pk to a new public key pk$^+$.

In step S503, using an existing template C = ($c_1$, $c_2$, ..., $c_T$) and the random number value $\delta$, the template updating part 307 computes a new template C$^+$ = ($\delta c_1$, $\delta c_2$, ..., $\delta c_T$).

Then, the storage part 301 overwrites the existing template C to store the new template C$^+$.

At this time, the storage part 301 overwrites the public key parameter e(g, g^) and the random bases W and W^ to store the new public key parameter e(g, g^)$^+$ and the new random bases W$^+$ and W^$^+$ generated by the public key updating part 306.

Storing the new public key parameter e(g, g^)$^+$ and the new random bases W$^+$ and W^$^+$ corresponds to overwriting the existing public key pk to store the new public key pk$^+$.

In step S504, the template updating part 307 erases the random number value $\delta$.

Finally, in step S505, the new public key parameter e(g, g^)$^+$ and the new random bases W$^+$ = ($\delta w_1$, $\delta w_2$, $\delta w_3$) and W^$^+$ = ($\delta w\text{^}_1$, $\delta w\text{^}_2$, $\delta w\text{^}_3$) are made public.

Step S505 is realized, for example, by the communication part 304 by transmitting the new public key parameter

$e(g, g\text{^})^+$ and the new random bases $W^+$ and $W\text{^}^+$ to the certification device 101 and the decryption device 103.

In the certification device 101 and the decryption device 103, the new public key parameter $e(g, g\text{^})^+$ and the new random bases $W^+$ and $W\text{^}^+$ can be used to generate the new public key $pk^+$. Thus, transmitting the new public key parameter $e(g, g\text{^})^+$ and the new random bases $W^+$ and $W\text{^}^+$ is synonymous with transmitting the new public key $pk^+$.

Instead of transmitting the new public key parameter $(g, g\text{^})^+$ and the new random bases $W^+$ and $W\text{^}^+$, the communication part 304 may transmit the new public key $pk^+$ to the certification device 101 and the decryption device 103.

Instead of being transmitted by the communication part 304, the new public key parameter $e(g, g\text{^})^+$ and the new random bases $W^+$ and $W\text{^}^+$ (or the new public key $pk^+$) may be stored in a portable storage medium, and the certification device 101 and the decryption device 103 may read the new public key parameter $e(g, g\text{^})^+$ and the new random bases $W^+$ and $W\text{^}^+$ (or the new public key $pk^+$) from the portable storage medium.

Thereafter, using the new public key $pk^+$ and the new template $C^+$, the authentication process is performed in accordance with the procedure presented in Embodiment 2 of Patent Literature 1 (i.e., Embodiment 5 of the present specification).

Specifically, using the new public key $pk^+$, the certification device 101 first encrypts the biometric information of the user and transmits the encrypted biometric information for authentication to the authentication device 102.

Then, using the encrypted biometric information (new template $C^+$) in the storage part 301, the encrypted biometric information received, and the new public key $pk^+$ in the storage part 301, the authentication device 102 generates encrypted similarity degree information and transmits the encrypted similarity degree information to the decryption device 103.

Then, using the secret key sk and the new public key $pk^+$, the decryption device 103 decrypts the similarity degree and transmits the decrypted similarity degree to the authentication device 102.

Finally, the authentication device 102 compares the similarity degree with the threshold and performs authentication.

Note that even when the public key and the template are updated in accordance with the procedure shown in Fig. 5, the secret key sk is not updated.

Because of the property of the algorithm, the decryption device 103 can decrypt the similarity degree without the secret key sk being updated.

Updating the template and the public key in accordance with the above procedure ensures that even if an old template is leaked, it is impossible to impersonate the authentication device 102 by using the old template.

This is because the public key parameter and the random bases which are parts of the public key have been replaced with the new public key parameter $e(g, g\text{^})^+$ and the new random bases $W^+ = (\delta w_1, \delta w_2, \delta w_3)$ and $W\text{^}^+ = (\delta w\text{^}_1, \delta w\text{^}_2, \delta w\text{^}_3)$, and the new public key parameter and the new random bases are used in the decryption process in the decryption device 103. Thus, there is a discrepancy between the new public key parameter and the new random bases and the old template, and this discrepancy reflects on the result of decryption of the Hamming distance or Euclidean squared distance, resulting in a random value depending on the random number value $\delta$.

Updating the template and the public key in accordance with the above procedure ensures that even if the old template, the new public key parameter, and the new random bases are obtained, the new template cannot be computed.

This is because this computational problem amounts to the "computational Diffie-Hellman problem" which is considered to be one of problems difficult to compute in the field of complexity theory.

Embodiment 1 has been described above.

According to Embodiment 1, an effect can be obtained in that a template can be securely updated in a data processing device that employs the Okamoto-Takashima homomorphic encryption.

Therefore, even if a template is leaked, "impersonation" using the leaked template can be effectively countered and security strength can be enhanced.

According to Embodiment 1, an effect can be obtained in that use of the Okamoto-Takashima homomorphic encryption allows the size of a group to be made smaller compared to when the BGN encryption is used, so that arithmetic operations can be performed at high speed.

Embodiment 2

This embodiment will describe the method for securely updating a template in a data processing device that employs the BGN (Boneh-Goh-Nissim) encryption presented in Non-Patent Literature 3.

An example of a configuration of a biometric authentication system according to this embodiment is as shown in Fig. 1.

An example of an internal configuration of each of the certification device 101, the authentication device 102, and the decryption device 103 according to this embodiment is as shown in Figs. 2 to 4, respectively.

Algorithms of the BGN encryption will be described first.

The BGN encryption is also a type of doubly homomorphic encryption.

The BGN encryption is composed of three algorithms, namely a key generation algorithm, an encryption algorithm, and a decryption algorithm.

The key generation algorithm is as follows.

Assume that p and q are each prime numbers.

Groups G and $G_T$ of an order N are generated where N = pq.

Assume that e: $G \times G \to G_T$ is a pairing that satisfies bilinearity and non-degeneracy.

Assume that g and u are elements uniformly randomly selected from G

Based on h = $u^q$, h is defined.

Assume that a public key is $((G, G_T, N, e), g, h, e(g, g))$ and a secret key is p.

The encryption algorithm is as follows.

Assume that a plaintext space is {0, 1, ..., L}.

From {0, 1, ..., N-1}, r is uniformly randomly selected.

Assume that a ciphertext E(x) corresponding to x is E(x) = $g^x h^r$.

The decryption algorithm is as follows.

Assuming that the ciphertext is E(x), $E(x)^p$ is first computed using the secret key p.

Based on the definition, $E(x)^p = (g^x h^r)^p = (g^p)^x$.

For this value, a discrete logarithm having a base $g^p$ is computed to obtain an original plaintext x. Note that g has been distributed by the decryption device 103 as a part of the public key.

Computation of a discrete logarithm is considered to be difficult with the current computer capability. It is known, however, that when the size L of a plaintext space is small, the discrete logarithm can be computed with the computation amount of approximately $\sqrt{L}$ by using Pollard's lambda method.

The method for securely updating a template in the data processing device that employs the above BGN encryption will be described.

In the present specification, the setup process, the registration process, and the authentication process are as described in Patent Literature 1 including the symbols.

The setup process, the registration process, and the authentication process will be described in detail in Embodiment 6. In Embodiment 2, only the template updating process will be described.

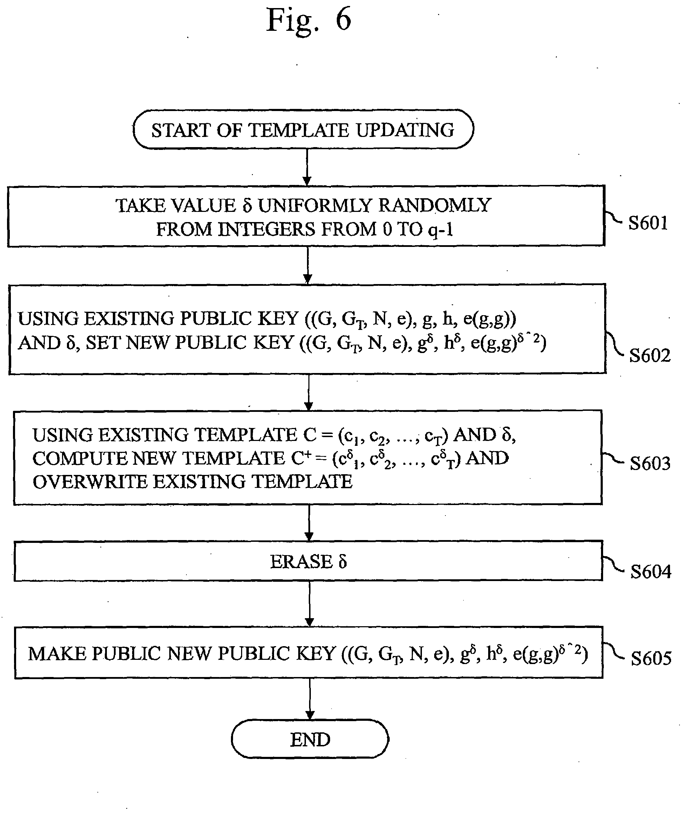

Referring to Fig. 6, the updating of a template will be described in detail.

Fig. 6 is a flowchart showing a procedure for updating a template.

When a trigger event occurs, first in S601, the random number generating part 305 takes a value $\delta$ uniformly randomly from integers from 0 to q-1.

The value $\delta$ is a random number value.

The term "uniformly" above means that each of values 0 to q-1 occurs with the same probability.

As described above, "q" is a prime number.

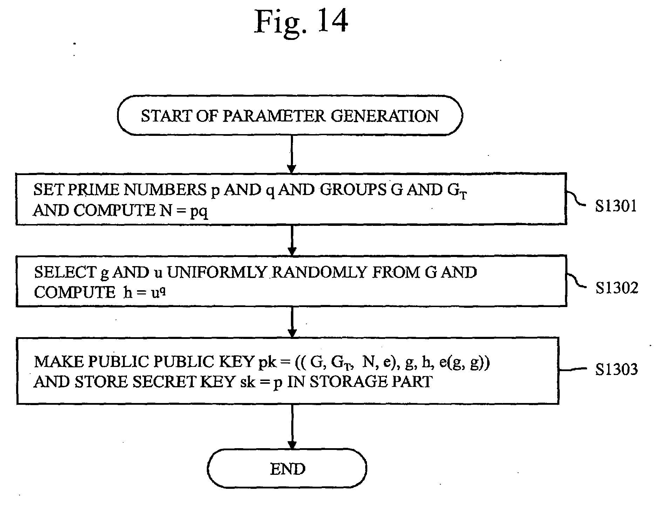

As shown in S1301 of Fig. 14 to be described in Embodiment 6, N = pq. As shown in S1303 of Fig. 14, a public key pk = $((G, G_T, N, e), g, h, e(g, g))$, so that the prime number q is a part (element) of the public key pk.

That is, the random number generating part 305 generates a random number using a part of the public key pk.

In step S602, using the existing public key $((G, G_T, N, e), g, h, e(g, g))$ and the random number value $\delta$, the public key updating part 306 sets a new public key $((G, G_T, N, e), g^\delta, h^\delta, e(g, g)^{\delta^2})$.

In step S603, using an existing template C = $(c_1, c_2, ..., c_T)$ and the random number value $\delta$, the template updating part 307 computes a new template $C^+ = (c^\delta_1, c\delta_2, ..., c^\delta_T)$.

Then, the storage part 301 overwrites the existing template C to store the new template $C^+$.

At this time, the storage part 301 also overwrites the existing public key $(G, G_T, N, e), g, h, e(g, g))$ to store the new public key $((G, G_T, N, e), g\delta, h\delta, e(g, g)^{\delta^2})$ generated by the public key updating part 306.

In step S604, the template updating part 307 erases the random number value $\delta$.

Finally, in step S605, the new public key $((G, G_T, N, e), g^\delta, h^\delta, e(g, g)^{\delta^2})$ is made public.

Step S605 is realized, for example, by the communication part 304 by transmitting the new public key $((G, G_T, N, e), g^\delta, h^\delta, e(g, g)^{\delta^2})$ to the certification device 101 and the decryption device 103.

Instead of being transmitted by the communication part 304, the new public key $((G, G_T, N, e), g^\delta, h^\delta, e(g, g)^{\delta^2})$ may be stored in a portable storage medium, and the certification device 101 and the decryption device 103 may read the new public key $((G, G_T, N, e), g^\delta, h^\delta, e(g, g)^{\delta^2})$ from the portable storage medium.

Thereafter, using the new public key $((G, G_T, N, e), g^\delta, h^\delta, e(g, g)^{\delta^2})$ and the new template $C^+$, the authentication process is performed in accordance with the procedure presented in Embodiment 4 of Patent Literature 1 (i.e., Embodiment 6 of the present specification).

Specifically, using the new public key $((G, G_T, N, e), g^\delta, h^\delta, e(g, g)^{\delta^2})$, the certification device 101 first encrypts the biometric information of the user and transmits encrypted biometric information for authentication to the authentication device 102.

Then, using the encrypted biometric information (new template $C^+$) in the storage part 301, the encrypted biometric information received, and the new public key $((G, G_T, N, e), g^\delta, h^\delta, e(g, g)^{\delta^2})$ in the storage part 301, the authentication device 102 generates encrypted similarity degree information, and transmits the encrypted similarity degree information to the decryption device 103.

Then, using the secret key sk and the new public key $((G, G_T, N, e), g^\delta, h^\delta, e(g, g)^{\delta^2})$, the decryption device 103 decrypts the similarity degree and transmits the decrypted similarity degree to the authentication device 102.

Finally, the authentication device 102 compares the similarity degree with the threshold and performs authentication.

Note that even when the public key and the template are updated in accordance with the procedure shown in Fig. 6, the secret key sk is not updated.

Because of the property of the algorithm, the decryption device 103 can decrypt the similarity degree without the secret key sk being updated.

Updating the template and the public key in accordance with the above procedure ensures that even if an old template is leaked, it is impossible to impersonate the authentication device 102 by using the old template.

This is because the public key has been replaced with the new public key $((G, G_T, N, e), g^\delta, h^\delta, e(g, g)^{\delta^2})$ and the new public key is used in the decryption process in the decryption device 103. Thus, there is a discrepancy between the new public key and the old template, and this discrepancy reflects on the result of decryption of the Hamming distance or Euclidean squared distance, resulting in a random value depending on the random number value $\delta$.

Updating the template and the public key in accordance with the above procedure ensures that even if the old template and the new random bases are obtained, the new template cannot be computed.

This is because this computational problem amounts to the "computational Diffie-Hellman problem" which is considered to be one of problems difficult to compute in the field of complexity theory.

Embodiment 2 has been described above.

According to Embodiment 2, an effect can be obtained in that a template can be securely updated in a data processing device that employs the BGN encryption.

Therefore, even if a template is leaked, "impersonation" using the leaked template can be effectively countered and security strength can be enhanced.

According to Embodiment 2, an effect can be obtained in that use of the BGN encryption allows the size of a template to be reduced compared to Embodiment 1.

Embodiment 3

This embodiment will describe the method for implementing the countermeasure against replay attacks by applying the template updating method of Embodiment 1.

The configuration of the system and the configuration of each device are as shown in Figs. 1 to 4, so that description thereof will be omitted here.

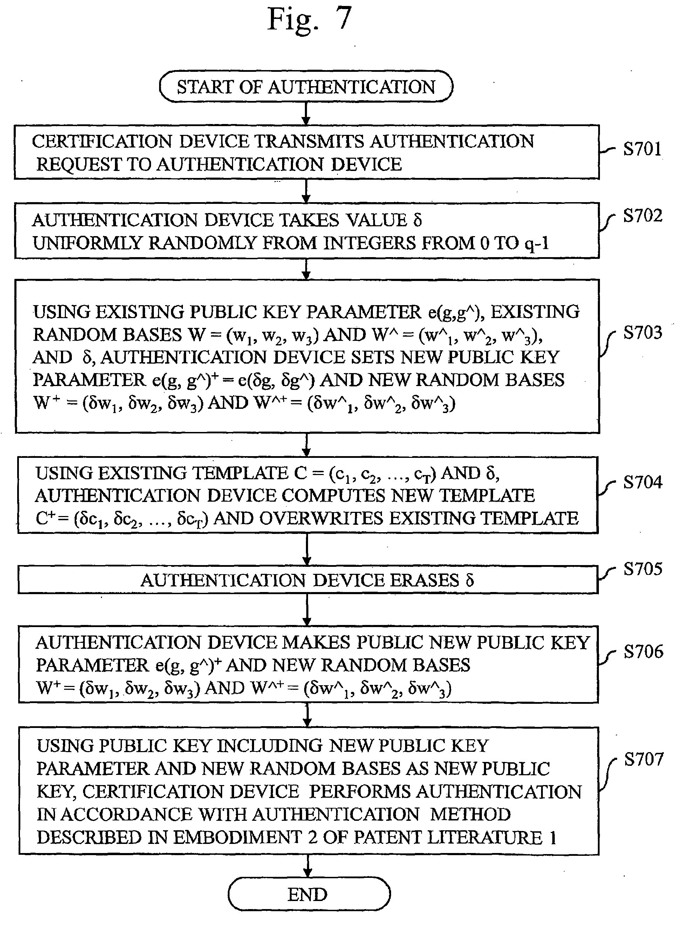

Referring to Fig. 7, the method for implementing the countermeasure against replay attacks by applying the template updating method of Embodiment 1 will be described in detail.

Fig. 7 is a flowchart showing a procedure in a case where the countermeasure against replay attacks is implemented by applying the template updating method of Embodiment 1.

In Fig. 7, in step S701, the certification device 101 transmits an authentication request.

In step S702, in the authentication device 102 which has received the authentication request, the random number generating part 305 takes a value $\delta$ uniformly randomly from integers from 0 to q-1.

In step S703, using an existing public key parameter $e(g, g^\wedge)$ and existing random bases $W = (w_1, w_2, w_3)$ and $W^\wedge = (w^\wedge_1, w^\wedge_2, w^\wedge_3)$, and the random number value $\delta$, the public key updating part 306 sets a new public key parameter $e(g, g^\wedge)^+ = e(\delta g, \delta g^\wedge)$ and new random bases $W^+ = (\delta w_1, \delta w_2, \delta w_3)$ and $W^{\wedge+} = (\delta w^\wedge_1, \delta w^\wedge_2, \delta w^\wedge_3)$.

In step S704, using an existing template $C = (c_1, c_2, ..., c_T)$ and the random number value $\delta$, the template updating part 307 computes a new template $C^+ = (\delta c_1, \delta c_2, ..., \delta c_T)$, and the storage part 301 overwrites the existing template to store the new template $C^+$.

The storage part 301 also overwrites the existing public key parameter $e(g, g^\wedge)$ and the existing random bases $W$ and $W^\wedge$ to store the new public key parameter $(g, g^\wedge)^+$ and the new random bases $W^+$ and $W^{\wedge+}$.

In step S705, the template updating part 307 erases the random number value $\delta$.

In step S706, the new public key parameter $e(g, g^\wedge)^+$ and the new random bases $W^+ = (\delta w_1, \delta w_2, \delta w_3)$ and $W^{\wedge+} = (\delta w^\wedge_1, \delta w^\wedge_2, \delta w^\wedge_3)$ are made public.

In step S707 and thereafter, after receiving the new public key parameter and the new random bases, the certification device 101 performs authentication in accordance with the authentication method described in Embodiment 2 of Patent Literature 1 (i.e., Embodiment 5 of the present specification) by using a public key including the new public key parameter and the new random bases as a new public key.

Performing the authentication process in accordance with the above procedure ensures that a new public key is generated for each authentication (each time an authentication request is transmitted), so that a replay attack can be prevented.

Embodiment 3 has been described above.

According to Embodiment 3, an effect can be obtained in that the countermeasure against replay attacks can be implemented by applying the template updating method described in Embodiment 1 and no additional device is newly required, so that cost reduction can be achieved compared to a case where the countermeasure against replay attacks is implemented separately.

Embodiment 4

This embodiment will describe the method for implementing the countermeasure against replay attacks by applying the template updating method of Embodiment 2.

The configuration of the system and the configuration of each device are as shown in Figs. 1 to 4, so that description thereof will be omitted.

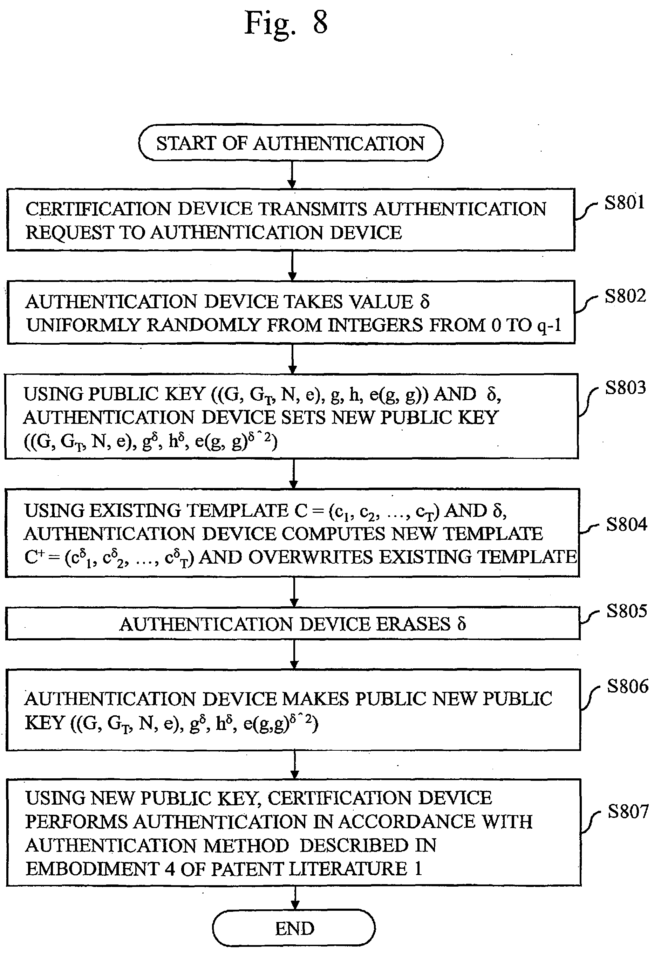

Referring to Fig. 8, the method for implementing the countermeasure against replay attacks by applying the template updating method of Embodiment 2 will be described in detail.

Fig. 8 is a flowchart showing a procedure in a case where the countermeasure against replay attacks is implemented by applying the template updating method of Embodiment 2.

In Fig. 8, in step S801, the certification device 101 transmits an authentication request.

In step S802, in the authentication device 102 which has received the authentication request, the random number generating part 305 takes a value 8 uniformly randomly from integers from 0 to q-1.

In step S803, using a public key $((G, G_T, N, e), g, h, e(g, g))$ and the random number value $\delta$, the public key updating part 306 sets a new public key $((G, G_T, N, e), g^\delta, h^\delta, e_{(g}, g)^{\delta^2})$.

In step S804, using an existing template $C = (c_1, c_2, ..., c_T)$ and the random number value $\delta$, the template updating part 307 computes a new template $C^+ = (c^\delta_1, c^\delta_2, ..., c^\delta_T)$, and the storage part 301 overwrites the existing template to store the new template $C^+$.

The storage part 301 also overwrites the existing public key to store the new public key.

In step S805, the template updating part 307 erases the random number value $\delta$.

In step S806, the new public key $((G, G_T, N, e), g^\delta, h^\delta, e(g, g)^{\delta^2})$ is made public.

In step S807 and thereafter, after receiving the new public key, the certification device 101 performs authentication in accordance with the authentication method of Embodiment 4 of Patent Literature 1 (i.e., Embodiment 6 of the present specification) by using the new public key.

Performing the authentication process in accordance with the above procedure ensures that a new public key is generated for each authentication (each time an authentication request is transmitted), so that a replay attack can be prevented.

Embodiment 4 has been described above.

According to Embodiment 4, an effect can be obtained in that the countermeasure against replay attacks can be implemented by applying the template updating method described in Embodiment 2 and no additional device is newly required, so that cost reduction can be achieved compared to a case where the countermeasure against replay attacks is implemented separately.

The template updating methods have been described in Embodiments 1 and 2, and how to implement the countermeasures against replay attacks by applying these methods has been described in Embodiments 3 and 4.

These can naturally be employed in combination.

That is, the countermeasure against replay attack may be implemented for each authentication, and the template updating process may further be performed when there is a risk of template leakage.

Embodiment 5

In Embodiment 5, to supplement the description of Embodiments 1 and 3, the setup process, the registration process, and the authentication process in the scheme described in Embodiment 2 of Patent Literature 1 will be explained.

In the scheme described in Embodiment 2 of Patent Literature 1, T pieces of arrays are provided to constitute a feature vector. The Hamming distance or Euclidean squared distance between two feature vectors is used as an index of similarity degree.

Assume that the two feature vectors are $b = (b_1, b_2, ..., b_T)$ and $b' = (b'_1, b'_2, ..., b'_T)$.

In this case, the Hamming distance between the two feature vectors is given by Formula 6 (where $b_i, b'_i \in \{0, 1\}$), and the Euclidean squared distance between the two feature vectors is given by Formula 7.

[Formula 6]

$$d_{\mathrm{H}}(b,b') = \sum_{i=1}^{T}(b_i \oplus b_i') = \sum_{i=1}^{T}(b_i - b_i')^2$$

[Formula 7]

$$d_{\mathrm{E2}}(b,b') = \sum_{i=1}^{T}(b_i - b_i')^2$$

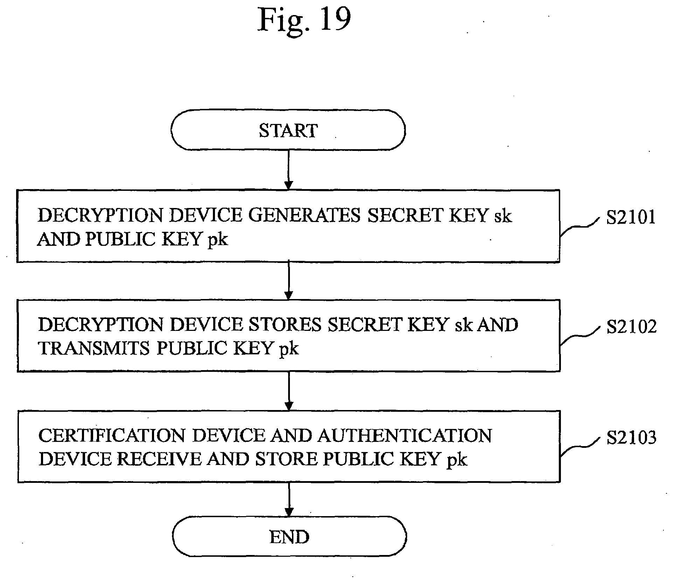

Referring to Figs. 19 to 22, each of the setup process, the registration process, and the authentication process in the scheme described in Embodiment 2 of Patent Literature 1 will now be explained in outline.

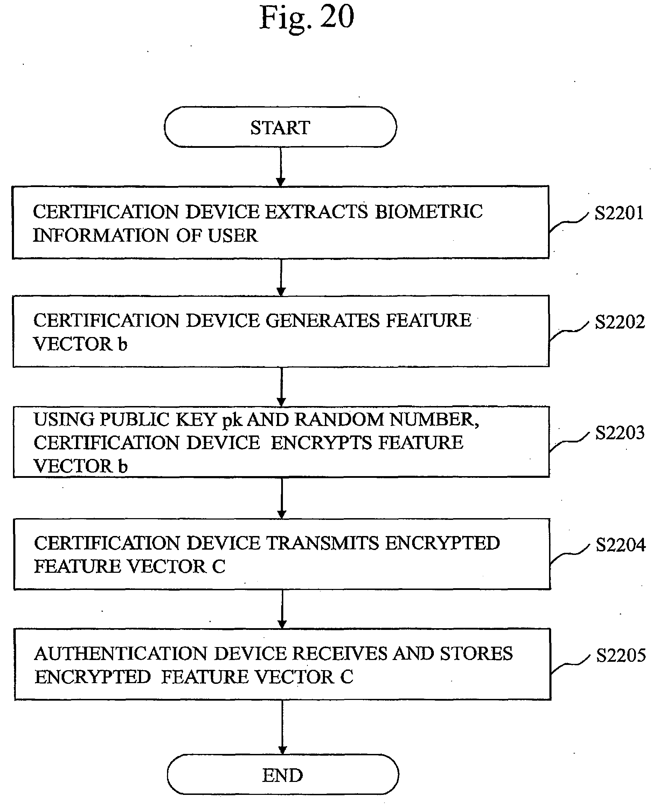

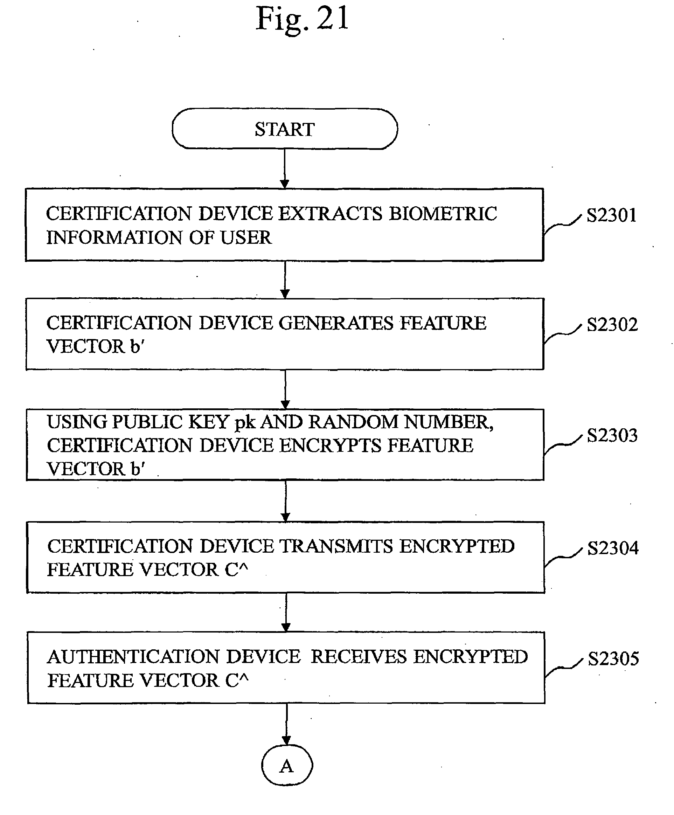

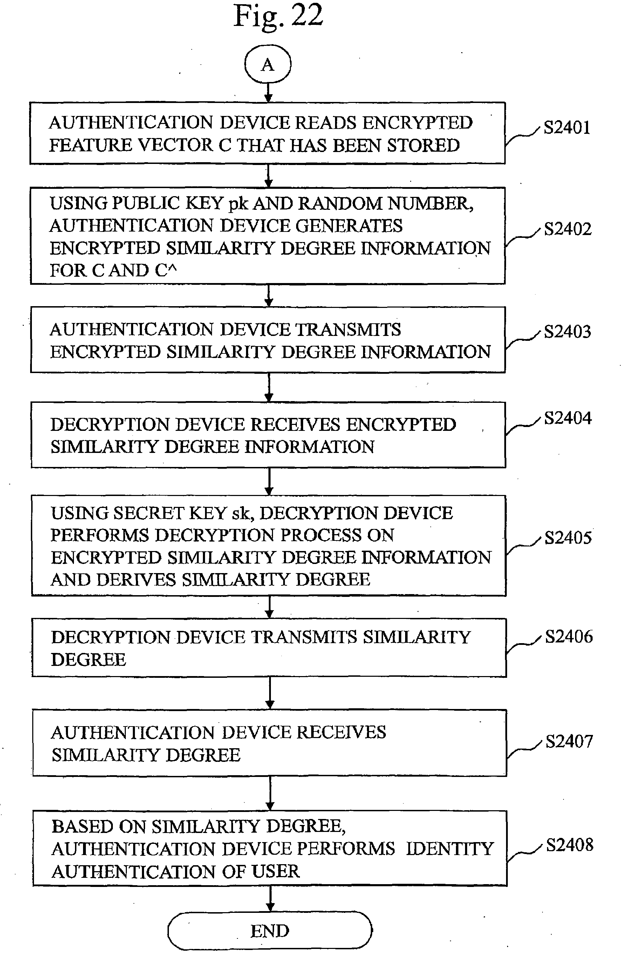

Fig. 19 shows an outline of the setup process, Fig. 20 shows an outline of the registration process, and Figs. 21 and 22 show an outline of the authentication process.

Referring to Fig. 19, the outline of the setup process will be described.

First, the parameter generating part 401 of the decryption device 103 generates a secret key sk and a public key pk based on the Okamoto-Takashima encryption algorithm (S2101).

Then, the storage part 403 of the decryption device 103 stores the secret key sk, and the communication part 404 transmits the public key pk to the certification device 101 and the authentication device 102 (S2102).

In the certification device 101, the communication part 206 receives the public key pk and the storage part 205 stores the public key pk. In the authentication device 102, the communication part 304 receives the public key pk and the storage part 301 stores the public key pk (S2102).

Note that an example of transmitting and receiving the public key pk is described herein, but another method may be employed to distribute the public key pk to the certification device 101 and the authentication device 102.

For example, the decryption device 103 may store the public key pk in a recording medium, and the certification device 101 and the authentication device 102 may read the public key pk from the recording medium and store the public key pk.

Referring to Fig. 20, the outline of the registration process will be described.

First, in the certification device 101, the biometric information extracting part 201 extracts biometric information of the user (S2201).

Then, the feature vector forming part 202 of the certification device 101 generates a feature vector b of the biometric information extracted in S2201 (S2202).

Then, using a part of the public key pk, the random number generating part 203 of the certification device 101 generates a random number. The encrypting part 204 reads the public key pk from the storage part 205. Using the public key pk and the random number, the encrypting part 204 encrypts the feature vector b (S2203).

Then, the communication part 206 of the certification device 101 transmits an encrypted feature vector C to the authentication device 102 (S2204).

Then, the communication part 304 of the authentication device 102 receives the encrypted feature vector C and the storage part 205 stores the encrypted feature vector C(S2205).

Referring to Figs. 21 and 22, the outline of the authentication process will be described.

First, in the certification device 101, the biometric information extracting part 201 extracts biometric information of the user (S2301).

Then, the feature vector forming part 202 of the certification device 101 generates a feature vector b' of the biometric information extracted in S2301 (S2302).

Then, using a part of the public key pk, the random number generating part 203 of the certification device 101 generates a random number. The encrypting part 204 reads the public key pk from the storage part 205. Using the public key pk and the random number, the encrypting part 204 encrypts the feature vector b' (S2303).

Then, the communication part 206 of the certification device 101 transmits an encrypted feature vector C^ to the authentication device 102 (S2304).

Then, the communication part 304 of the authentication device 102 receives the encrypted feature vector C^ (S2305).

Then, the encrypted similarity degree generating part 302 of the authentication device 102 reads the encrypted feature vector C from the storage part 301 (S2401).

Then, using a part of the public key pk, the random number generating part 305 of the authentication device 102 generates a random number. The encrypted similarity degree generating part 302 reads the public key pk from the storage part 301. Using the public key pk and the random number, the encrypted similarity degree generating part 302 generates encrypted similarity degree information for the encrypted feature vector C read from the storage part 301 and the encrypted feature vector C^ received from the certification device 101 (S2402).

Since the authentication device 102 cannot find out the secret key sk corresponding to the public key pk, the authentication device 102 cannot decrypt the encrypted feature vector C and the encrypted feature vector C^. For this reason, the encrypted similarity degree information is generated with the encrypted feature vector C and the encrypted feature vector C^ being kept as encrypted.

Then, the communication part 304 of the authentication device 102 transmits the encrypted similarity degree information to the decryption device 103 (S2403).

Then, the communication part 404 of the decryption device 103 receives the encrypted similarity degree information (S2404).

Then, the decrypting part 402 of the decryption device 103 reads the secret key sk from the parameter generating part 401. Using the secret key sk, the decrypting part 402 performs a decryption process on the encrypted similarity degree information to derive a plaintext similarity degree (S2405).

Then, the communication part 404 of the decryption device 103 transmits the plaintext similarity degree to the authentication device 102 (S2406). Note that the similarity degree is information indicating to what degree the feature vector b for registration and the feature vector b' for authentication are similar to each other and that the feature vectors and the biometric information cannot be computed from the similarity degree.

Then, the communication part 304 of the authentication device 102 receives the plaintext similarity degree (S2407).

Then, the checking part 303 of the authentication device 102 determines whether or not the plaintext similarity degree is equal to or greater than a predetermined threshold. If the plaintext similarity degree is equal to or greater than the threshold, the checking part 303 determines that the user is the correct person. If the plaintext similarity degree is less than the threshold, the checking part 303 determines that the user is a different person (S2408).

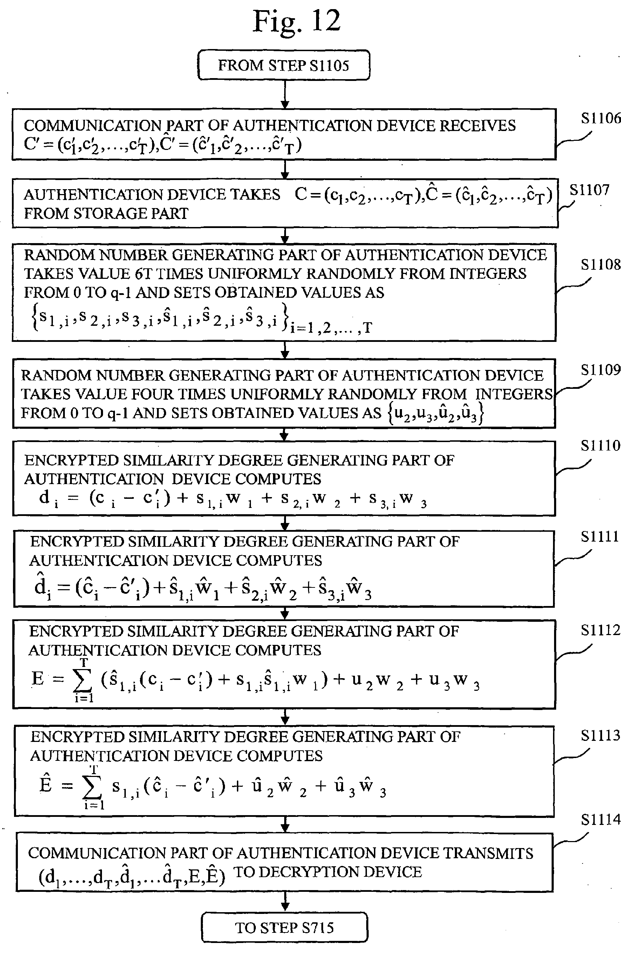

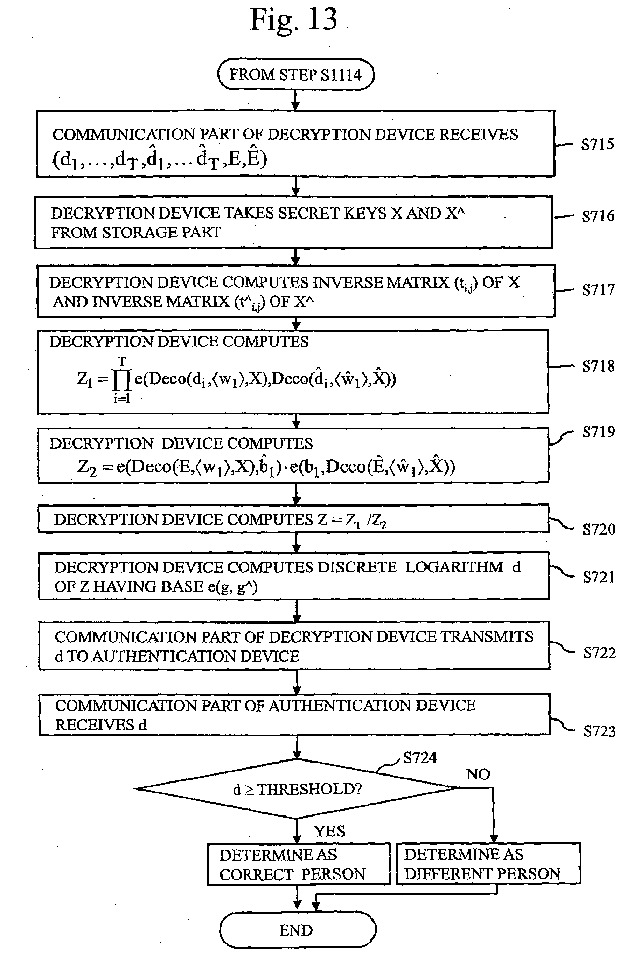

Referring to Figs. 9 to 13, operation of each process will be described in more detail.

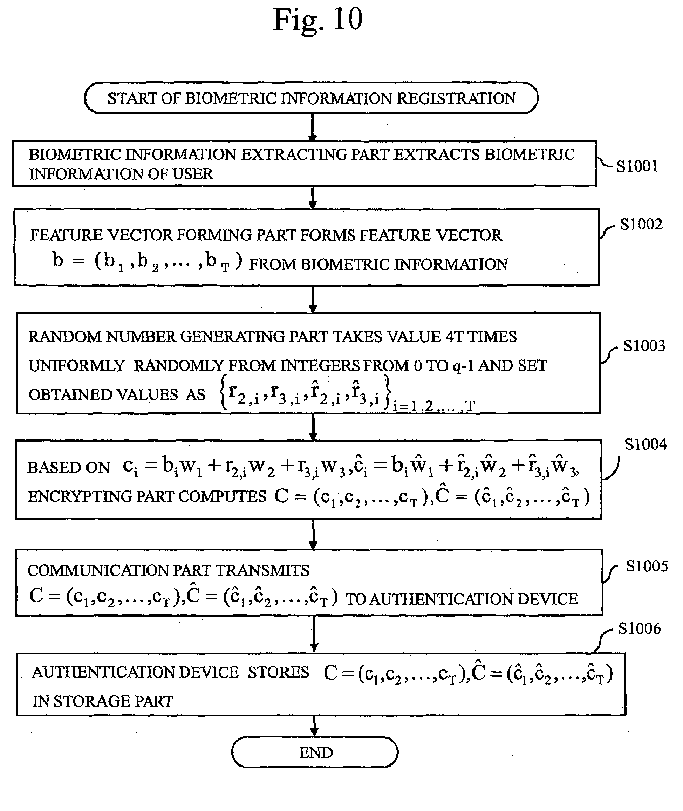

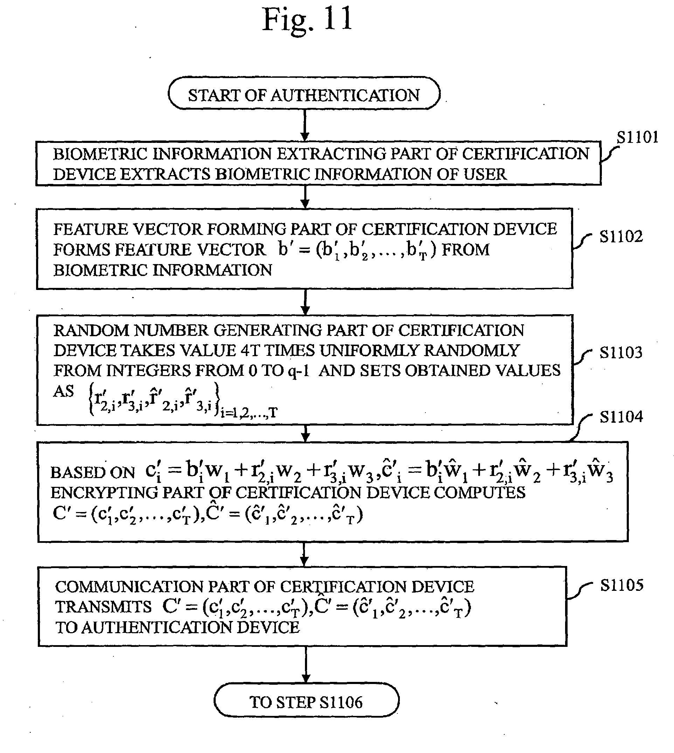

Fig. 9 shows the details of the setup process, Fig. 10 shows the details of the registration process, and Figs. 11 to 13 show the details of the authentication process.

The setup will be described first with reference to Fig. 9.

In the setup, the decryption device 103 generates a public key pk and a secret key sk.

The public key pk and the secret key sk may be different for each user. Alternatively, there may be one public key and one secret key for the system.

For simplicity of explanation, a case where one public key and one secret key are used for the system will be explained here. It is easy, however, to expand this into a case where a public key and a secret key are provided for each user.

Fig. 9 is a flowchart showing a procedure for generating the public key pk and the secret key sk in the parameter generating part 401.

First, in step S901, the parameter generating part 401 sets a group order q, groups G, G^, and $G_T$, and generators $g \in G$ and $g^\wedge \in G^\wedge$.

A specific method for this can be found, for example, in Non-Patent Literature 5, so that it is omitted here.

Note that the group order is determined according to the security level and is normally a large prime number having, for example, 200 bits or 1024 bits.

In step S902, the parameter generating part 401 sets canonical bases A = ($a_1$, $a_2$, $a_3$) and A^ = ($a^\wedge_1$, $a^\wedge_2$, $a^\wedge_3$) for vector spaces V = G $\times$ G $\times$ G and V^ = G^ $\times$ G^ $\times$ G^.

The setting method is as described above.

In step S903, the parameter generating part 401 takes a value nine times uniformly randomly from integers from 0 to q-1, and sets a 3-row 3-column matrix X = ($X_{i,j}$) using the obtained values.

This matrix should be a regular matrix. The matrix which is set with this method will be a regular matrix with a very high probability. For further accuracy, after the matrix is set in this manner, the regularity may be checked, for example, by computing a determinant. If the matrix is not regular, elements of the matrix may be randomly selected again.

In step S904, the parameter generating part 401 takes a value nine times uniformly randomly from integers from 0 to q-1, and sets a 3-row 3-column matrix X^ = ($X^\wedge_{i,j}$) using the obtained values.

This matrix will be a regular matrix with a very high probability. If the matrix is not regular, elements of the matrix may be randomly selected again.

In step S905, the parameter generating part 401 sets random bases W = ($w_1$, $w_2$, $w_3$) and W^ = ($w^\wedge_1$, $w^\wedge_2$, $w^\wedge_3$) in accordance with the following Formula 8 and Formula 9.

## [Formula 8]

$$\mathbf{w}_i = \sum_{j=1}^{3} \chi_{i,j} \mathbf{a}_j$$

## [Formula 9]

$$\hat{\mathbf{w}}_i = \sum_{j=1}^{3} \hat{\chi}_{i,j} \hat{\mathbf{a}}_j$$

Finally, in step S906, the parameter generating part 401 makes public the public key pk = $(q, V, V^{\wedge}, e, G_T, A, A^{\wedge}, W, W^{\wedge}, e(g, g^{\wedge}))$ and stores the secret key sk = $(X, X^{\wedge})$ in the storage part 403.

Fig. 10 is a flowchart showing a procedure for registering biometric information in the certification device 101.

First, in step S1001, the biometric information extracting part 201 extracts biometric information of the user.

This can be performed by various methods. For example, extraction is performed by exposing the user's fingerprint to light and capturing its pattern with a sensor.

In step S1002, the feature vector forming part 202 forms a feature vector b = $(b_1, b_2, ..., b_T)$ from the biometric information.

T represents the size of an array that stores the feature vector, and is a value determined depending on how the feature vector is formed.

In this embodiment, the feature vector is formed by dividing the captured pattern into areas, detecting the presence or absence of a feature point in each area, and storing 1 at a corresponding position in the array if a feature point is present and storing 0 at a corresponding position in the array if a feature point is not present.

It should be noted that b; $\in \{0, 1\}$ for the Hamming distance and $b_i \in \{0, 1, ..., q-1\}$ for the Euclidean squared distance.

In step S1003, the random number generating part 203 takes a value 4T times uniformly randomly from integers from 0 to q-1 and sets the obtained values as $\{r_{2,i}, r_{3,i}, r^{\wedge}_{2,i}, r^{\wedge}_{3,i}\}$ i=1,2,...,T.

In step S1004, based on $c_i = b_i w_1 + r_{2,i} w_2 + r_{3,i} w_3$ and $c^{\wedge}_i = b_i w^{\wedge}_1 + r^{\wedge}_{2,i} w^{\wedge}_2 + r^{\wedge}_{3,i} w^{\wedge}_3$, the encrypting part 204 computes an encrypted feature vector C = $(c_1, c_2, ..., c_T)$ and an encrypted feature vector $C^{\wedge} = (c^{\wedge}_1, c^{\wedge}_2, ..., c^{\wedge}_T)$.

Note that $w_1, w_2$, and $w_3$ as well as $w^{\wedge}_1, w^{\wedge}_2$, and $w^{\wedge}_3$ have been respectively distributed by the decryption device 103 as a part (W and $W^{\wedge}$) of the public key.

In step S1005, the communication part 206 transmits the encrypted feature vector C = $(c_1, c_2, ..., c_T)$ and the encrypted feature vector $C^{\wedge} = (c^{\wedge}1, c^{\wedge}_2, ..., c^{\wedge}_T)$ to the authentication device 102.

At this time, it is desirable to employ a tamper detection technique for communication such as SSL to prevent tampering during communication.

Finally, in step S1006, the authentication device 102 stores the encrypted feature vector C = $(c_1, c_2, ..., c_T)$ and the encrypted feature vector $C^{\wedge} = (c^{\wedge}_1, c^{\wedge}_2, ..., c^{\wedge}_T)$ in the storage part 301.

The authentication method will be described with reference to Figs. 11, 12, and 13.

For simplicity, a case of so-called 1:1 authentication will be described where in authentication the user to be authenticated is separately specified by ID information or the like.

First, in step S1101, the biometric information extracting part 201 of the certification device 101 extracts biometric information of the user.

The extraction method is the same as the method employed in the registration of biometric information.

In step S1102, the feature vector forming part 202 of the certification device 101 forms a feature vector b' = $(b'_1, b'_2, ..., b'_T)$ from the biometric information.

The forming method is the same as the method employed in the registration of biometric information.

It should be noted that $b'_i \in \{0,1\}$ for the Hamming distance and $b'_i \in \{0, 1, ..., q-1\}$ for the Euclidean squared distance.

In step S1103, the random number generating part 203 of the certification device 101 takes a value 4T times uniformly randomly from integers from 0 to q-1 and sets the obtained values as $\{r'_{2,i}, r'_{3,i}, r^{\wedge}_{2,i}, r^{\wedge}_{3,i}\}$ i=1,2,...,T.

In step S1104, based on $c'_i = b'_i w_1 + r'_{2,i} w_2 + r'_{3,i} w_3$ and $c^{\wedge}_i = b'_i w^{\wedge}_1 + r'_{2,i} w^{\wedge}_2 + r'_{3,i} w^{\wedge}_3$, the encrypting part 204 of the certification device 101 computes an encrypted feature vector C' = $(c'_1, c'_2, ..., c'_T)$ and an encrypted feature vector $C^{\wedge'} = (c^{\wedge'}_1, c^{\wedge'}_2, ..., c^{\wedge'}_T)$.

In step S1105, the communication part 206 of the certification device 101 transmits the encrypted feature vector C' = (c'$_1$, c'$_2$, ..., c'$_T$) and the encrypted feature vector C^' = (c^'$_1$, c^'$_2$, ..., c^'$_T$) to the authentication device 102.

At this time, it is desirable to employ a tamper detection technique for communication such as SSL to prevent tampering during communication.

In step S1106, the communication part 206 of the authentication device 102 receives the encrypted feature vector C' = (c'$_1$, c'$_2$, ..., c'$_T$) and the encrypted feature vector C^' = (c^'$_1$, c^'$_2$, ..., c^'$_T$).

In step S1107, the encrypted similarity degree generating part 302 of the authentication device 102 takes the encrypted feature vector C = (c$_1$, c$_2$, ..., c$_T$) and the encrypted feature vector C^ = (c^$_1$, c^$_2$, ..., c^$_T$) from the storage part 301.

In general, encrypted biometric information of a large number of users is stored in the storage part 301, and the information to be taken is determined using ID information separately provided.

In step S1108, the random number generating part 203 of the authentication device 102 takes a value 6T times uniformly randomly from integers from 0 to q-1 and sets the obtained values as {s$_{1,i}$, S$_{2,i}$, S$_{3,i}$, s^$_{1,i}$, s^$_{2,i}$, s^$_{3,i}$}i=1,2,...,T.

In step S1109, the random number generating part 203 of the authentication device 102 takes a value four times uniformly randomly from integers from 0 to q-1 and sets the obtained values as {u$_2$, u$_3$, u^$_2$, u^$_3$}.

In step S1110, the encrypted similarity degree generating part 302 of the authentication device 102 computes d$_i$ = (c$_i$-c'$_i$) + s$_{1,i}$w$_1$) + S$_{2,i}$w$_2$ + s$_{3,i}$w$_3$.

Note that w$_1$, w$_2$, and w$_3$ have been distributed by the decryption device 103 as a part (W) of the public key.

In step S1111, the encrypted similarity degree generating part 302 of the authentication device 102 computes d^$_i$ = (c^$_i$-c^'$_i$) + s^$_{1,i}$w^$_1$) + s^$_{2,i}$w^$_2$ + s^$_{3,i}$w^$_3$.

Note that w^$_1$, w^$_2$, and w^$_3$ have been distributed by the decryption device 103 as a part (W^) of the public key.

In step S 1112, the encrypted similarity degree generating part 302 of the authentication device 102 computes E in accordance with Formula 10.

$$[\text{Formula } 10]$$

$$E = \sum_{i=1}^{T} \left( \hat{s}_{1,i}(\mathbf{c}_i - \mathbf{c}'_i) + s_{1,i}\hat{s}_{1,i}\mathbf{w}_1 \right) + u_2\mathbf{w}_2 + u_3\mathbf{w}_3$$

In step S1113, the encrypted similarity degree generating part 302 of the authentication device 102 computes E^ in accordance with Formula 11.

$$[\text{Formula } 11]$$

$$\hat{E} = \sum_{i=1}^{T} s_{1,i}(\hat{\mathbf{c}}_i - \hat{\mathbf{c}}'_i) + \hat{u}_2\hat{\mathbf{w}}_2 + \hat{u}_3\hat{\mathbf{w}}_3$$

In step S1114, the communication part 206 of the authentication device 102 transmits (d$_1$, ..., d$_T$, d^$_1$, ..., d^$_T$..., E, E^) to the decryption device 103.

At this time, it is desirable to employ a tamper detection technique for communication such as SSL to prevent tampering during communication.

In this embodiment, (d$_1$, ..., d$_T$, d^$_1$, ..., d^$_T$..., E, E^) is an example of encrypted similarity degree information.

In step S715, the communication part 404 of the decryption device 103 receives (d$_1$, ..., d$_T$, d^$_1$, ..., d^$_T$, E, E^).

In step S716, the decrypting part 402 of the decryption device 103 takes the secret key sk = (X, X^) from the storage part 403.

In step S717, the decrypting part 402 of the decryption device 103 computes an inverse matrix X$^{-1}$ = ( t$_{i,j}$) of X and an inverse matrix X^$^{-1}$ = (t^$_{i,j}$) of X^.

These values may be precomputed and stored in the storage part 403 and taken out, instead of being computed each time.

In step S718, the decryption device 103 computes Z$_1$ in accordance with Formula 12.

[Formula 12]

$$Z_1 = \prod_{i=1}^{T} e(Deco(\mathbf{d}_i, \langle \mathbf{w}_1 \rangle, X), Deco(\hat{\mathbf{d}}_i, \langle \hat{\mathbf{w}}_1 \rangle, \hat{X}))$$

The Deco algorithm is computed as shown in Formula 13. Note that k in Formula 13 denotes an integer.

[Formula 13]

$$\text{Deco}(\mathbf{d}_i, < \mathbf{w}_1 >, X):$$

$$\mathbf{y} = \sum_{i=1}^{3} \sum_{k=1}^{3} t_{i,1} x_{1,k} \phi_{k,i}(\mathbf{d}_i)$$

$$\text{Deco}(\hat{\mathbf{d}}_i, < \hat{\mathbf{w}}_1 >, \hat{X}):$$

$$\hat{\mathbf{y}} = \sum_{i=1}^{3} \sum_{k=1}^{3} \hat{t}_{i,1} \hat{x}_{1,k} \phi_{k,i}(\hat{\mathbf{d}}_i)$$

In step S719, the decrypting part 402 of the decryption device 103 computes $Z_2 = e(Deco(E, <w_1>, X), w^{\wedge}{}_1) \cdot e(w_1, Deco(E^{\wedge}, <w^{\wedge}{}_1>, X^{\wedge}))$.

The Deco algorithm is computed in the same manner as described above.

In step S720, the decrypting part 402 of the decryption device 103 computes $Z = Z_1/Z_2$.

In step S721, the decrypting part 402 of the decryption device 103 computes a discrete logarithm d of Z having a base $e(g, g^{\wedge})$. Note that $e(g, g^{\wedge})$ has been distributed by the decryption device 103 as a part of the public key.

The discrete logarithm d corresponds to the number of coincidences of feature points and represents the similarity degree.

Computation of a discrete logarithm is considered to be difficult with the current computer performance. However, a small d can be computed efficiently.

In this embodiment, d is sufficiently small compared to the order q, so that d can be computed efficiently.

In step S722, the communication part 404 of the decryption device 103 transmits the similarity degree d to the authentication device 102.

At this time, it is desirable to employ a tamper detection technique for communication such as SSL to prevent tampering during communication.

In step S723, the communication part 304 of the authentication device 102 receives the similarity degree d.

In step S724, whether or not the similarity degree d is equal to or greater than the threshold is checked.

The threshold is a value determined in the system in advance taking into account various factors such as the type of biometric information to be used and security requirements.

If the similarity degree d is equal to or greater than the threshold, it is determined that the encrypted biometric information transmitted from the certification device 101 belongs to the user specified by the ID.

On the other hand, if the similarity degree d is less than the threshold, it is determined that the encrypted biometric information transmitted from the certification device 101 does not belong to the user specified by the ID but belongs to a different person.

Through the above steps, the authentication device 102 can perform biometric authentication with the certification device 101.

In this embodiment, the method employing the three-dimensional dual pairing vector spaces has been disclosed. However, three-dimensional is an example and the dual pairing vector spaces do not necessarily have to be three-dimensional.

For example, the dual pairing vector spaces may be implemented as two-dimensional, or may be implemented as four-dimensional or greater.

In the case of two-dimensional, the vectors $W_3$ and $W^\wedge_3$ in this embodiment are not needed for implementation.

With this arrangement, an effect can be obtained in that the computation amount for registration of biometric information and for authentication can be reduced.

In the case of four-dimensional or greater, additional vectors may be configured to function in the same manner as $W_2$, $W_3$, $W^\wedge_2$, and $W^\wedge_3$.

That is, in computation of $c_i$, $c^\wedge_i$, $d_i$, and $d^\wedge_i$, each of the additional vectors may be multiplied by a random-number factor and summed with $W_2$, $W_3$, $W^\wedge_2$, and $W^\wedge_3$.

With this arrangement, a ciphertext that is more difficult to decipher can be created and security can be enhanced.


Embodiment 6

In Embodiment 6, to supplement the description of Embodiments 2 and 4, the setup process, the registration process, and the authentication process in the scheme described in Embodiment 4 of Patent Literature 1 will be explained.

Also in this embodiment, the outlines of the setup process, the registration process, and the authentication process are as shown in Figs. 19 to 22.

In the scheme described in Embodiment 4 of Patent Literature 1, an array of feature points is provided as a feature vector used for biometric authentication. If the user has a feature point, 1 is stored in the array. If the user does not have a feature point, 0 is stored in the array. This array is used as a feature vector. For authentication, the number of coincidences of 1 is used as an index of similarity degree. The following explanation will be made using this authentication scheme as an example.

The setup will be described first with reference to Fig. 14.

Fig. 14 is a flowchart showing a procedure for generating a public key and a secret key in the parameter generating part 401.

First, in step S1301, the parameter generating part 401 sets prime numbers p and q and groups G and $G_T$.

Note that the prime numbers are determined according to the security level. As the product of the prime numbers p and q is used as the group order, large prime numbers having, for example, 1024 bits or 2048 bits are usually used to prevent prime factorization.

In step S1302, the parameter generating part 401 selects g and u uniformly randomly from G and computes $h = u^q$.

Finally, in step S1303, the parameter generating part 401 makes public the public key pk = (($G$, $G_T$, $N$, $e$), g, h, e(g, g)) and stores the secret key sk = p in the storage part 403.

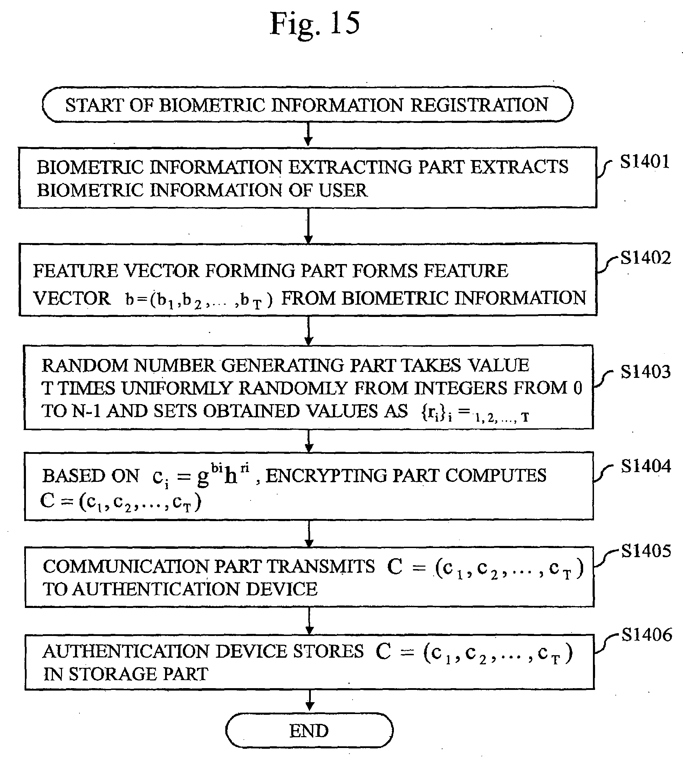

The registration method of biometric information will be described with reference to Fig. 15.

Note that a case where the user registers biometric information with the authentication device 102 via the certification device 101 will be explained here. The same method may be applied to a case where registration is performed directly with the authentication device 102 or a case where registration is performed via a device specifically provided for registration.

Fig. 15 is a flowchart showing a procedure for registering biometric information in the certification device 101.

First, in step S1401, the biometric information extracting part 201 extracts biometric information of the user. This can be performed with various methods. For example, extraction is performed by exposing the user's fingerprint to light and capturing its pattern with a sensor.

In step S1402, the feature vector forming part 202 forms a feature vector $b = (b_1, b_2, ..., b_T)$ from the biometric information.

In step S1403, the random number generating part 203 takes a value T times uniformly randomly from integers from 0 to N-1 and sets the obtained values as $\{r_i\}_{i=i,2,...,T}$.

In step S1404, based on $c_i = g^{b_i}h^{r_i}$, the encrypting part 204 computes an encrypted feature vector $C = (c_1, c_2, ..., c_T)$.

Note that g and h have been distributed by the decryption device 103 as a part of the public key.

In step S1405, the communication part 206 transmits the encrypted feature vector $C = (c_1, c_2, ..., c_T)$ to the authentication device 102.

Finally, in step S1406, the authentication device 102 stores the encrypted feature vector $C = (c_1, c_2, ..., c_T)$ in the storage part 301.

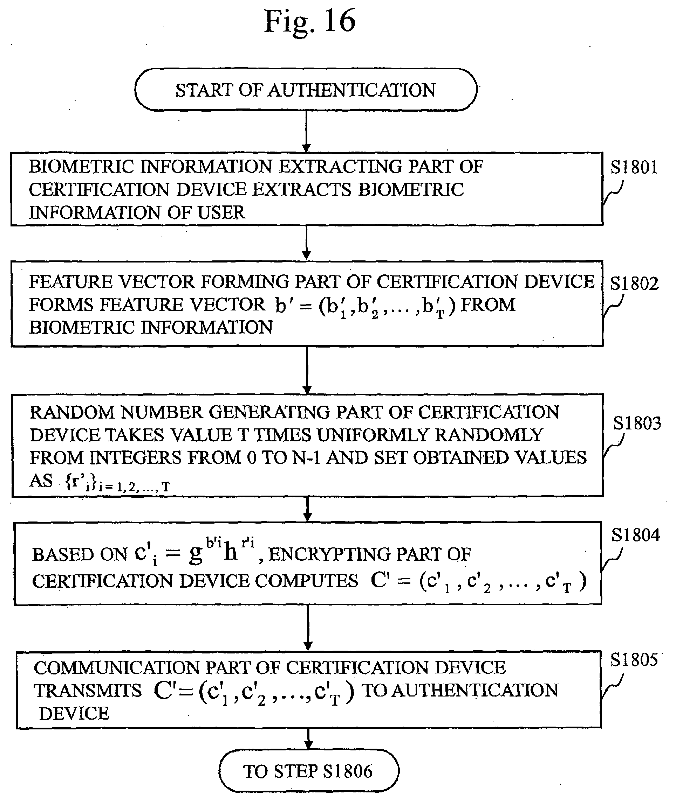

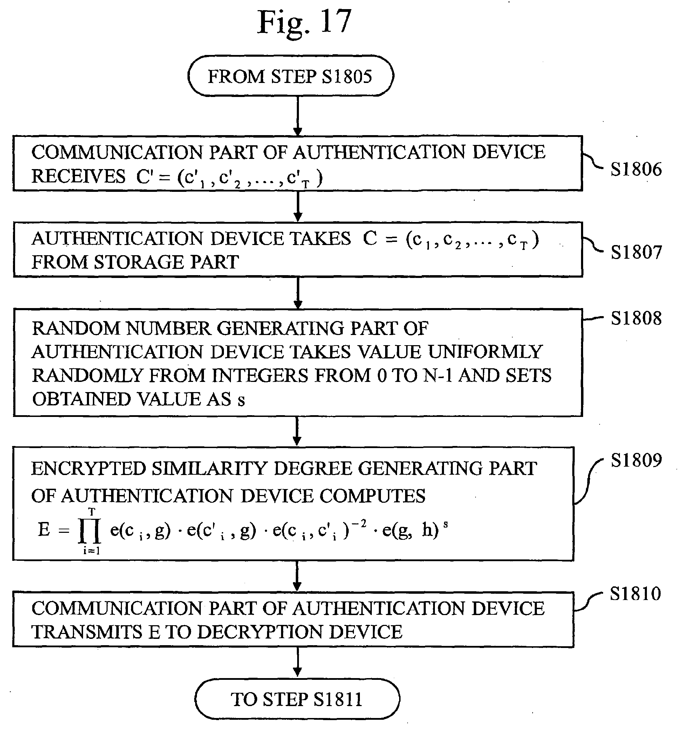

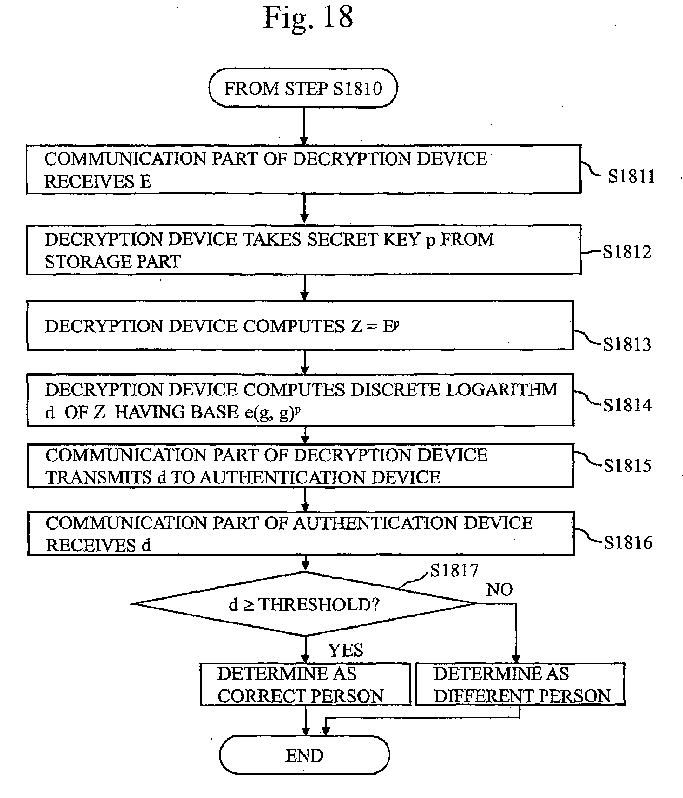

The authentication method will be described with reference to Figs. 16, 17, and 18.

For simplicity, a case of so-called 1:1 authentication will be described where in authentication the user to be authenticated is separately specified by ID information or the like.

First, in step S1801, the biometric information extracting part 201 of the certification device 101 extracts biometric information of the user.

The extraction method is the same as in the registration of biometric information.

In step S1802, the feature vector forming part 202 of the certification device 101 forms a feature vector b' = (b'$_1$, b'$_2$, ..., b'$_T$) from the biometric information.

The forming method is the same as in the registration of biometric information.

In step S1803, the random number generating part 203 of the certification device 101 takes a value T times uniformly randomly from integers from 0 to N-1 and sets the obtained values as $\{r'_i\}_{i=1,2,...,T}$.

In step S1804, based on $c'_i = g^{b'_i}h^{r'_i}$, the encrypting part 204 of the certification device 101 computes an encrypted feature vector C' = (c'$_1$, c'$_2$, ..., c'$_T$).

In step S1805, the communication part 206 of the certification device 101 transmits the encrypted feature vector C' = (c'$_1$, c'$_2$, ..., c'$_T$) to the authentication device 102.

At this time, it is desirable to employ a tamper detection technique for communication such as SSL to prevent tampering during communication.

In step S1806, the communication part 206 of the authentication device 102 receives the encrypted feature vector C' = (c'$_1$, c'$_2$, ..., c'$_T$).

In step S1807, the encrypted similarity degree generating part 302 of the authentication device 102 takes the encrypted feature vector C = (c$_1$, c$_2$, ..., c$_T$) from the storage part 301.

In step S1808, the random number generating part 305 of the authentication device 102 takes a value uniformly randomly from integers from 0 to N-1 and sets the obtained value as s.

In step S1809, the encrypted similarity degree generating part 302 of the authentication device 102 computes E in accordance with Formula 14.

[Formula 14]

$$E = \prod_{i=1}^{T} e(c_i, g) \cdot e(c'_i, g) \cdot e(c_i, c'_i)^{-2} \cdot e(g, h)^s$$

In step S1810, the communication part 304 of the authentication device 102 transmits E to the decryption device 103.

At this time, it is desirable to employ a tamper detection technique for communication such as SSL to prevent tampering during communication.

In this embodiment, E is the encrypted similarity degree information.

In step S 1811, the communication part 404 of the decryption device 103 receives E.

In step S1812, the decrypting part 402 of the decryption device 103 takes a secret key p from the storage part 403.

In step S1813, the decrypting part 402 of the decryption device 103 computes $Z = E^p$.

In step S1814, the decrypting part 402 of the decryption device 103 computes a discrete logarithm d of Z having a base $e(g, g)^p$.

Note that e(g, g) has been distributed by the decryption device 103 as a part of the public key.

Also in this embodiment, the discrete logarithm d corresponds to the similarity degree.

In step S1815, the communication part 404 of the decryption device 103 transmits d to the authentication device 102. At this time, it is desirable to employ a tamper detection technique for communication such as SSL to prevent tampering during communication.

In step S1816, the communication part 304 of the authentication device 102 receives the similarity degree d.

In step S1817, the checking part 303 checks whether or not the similarity degree d is equal to or greater than the threshold.

This threshold is a value determined in the system in advance taking into account various factors such as the type of biometric information to be used and security requirements.

If the similarity degree d is equal to or greater than the threshold, it is determined that the encrypted biometric information transmitted from the certification device 101 belongs to the user specified by the ID.

On the other hand, if the similarity degree d is less than the threshold, it is determined that the encrypted biometric information transmitted from the certification device 101 does not belong to the user specified by the ID, but belongs to a different person.

Through the above steps, the authentication device 102 can perform biometric authentication with the certification device 101.

Finally, an example of a hardware configuration of each of the certification device 101, the authentication device 102, and the decryption device 103 presented in Embodiments 1 to 6 will be described.

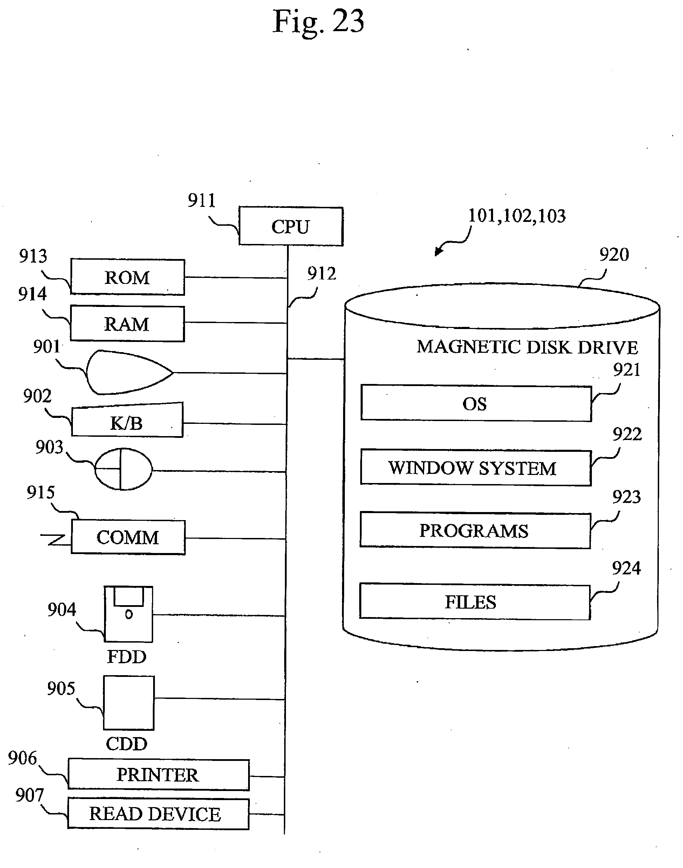

Fig. 23 is a diagram showing an example of hardware resources of each of the certification device 101, the authentication device 102, and the decryption device 103 presented in Embodiments 1 to 6.

Note that the configuration of Fig. 23 is an example of the hardware configuration of each of the certification device 101, the authentication device 102, and the decryption device 103, and that the hardware configuration of each of the certification device 101, the authentication device 102, and the decryption device 103 is not limited to the configuration shown in Fig. 23 and may be a different configuration.

In Fig. 23, each of the certification device 101, the authentication device 102, and the decryption device 103 includes a CPU 911 (also referred to as a Central Processing Unit, central processing device, processing device, computation device, microprocessor, microcomputer, or processor) that executes programs.

The CPU 911 is connected via a bus 912 to, for example, a ROM (Read Only Memory) 913, a RAM (Random Access Memory) 914, a communication board 915, a display device 901, a keyboard 902, a mouse 903, and a magnetic disk drive 920, and controls these hardware devices.

Furthermore, the CPU 911 may be connected to an FDD 904 (Flexible Disk Drive), a compact disc drive 905 (CDD), or a printer device 906. The certification device 101 is connected to a read device 907 that reads biometric information. In place of the magnetic disk drive 920, a storage device such as an optical disk drive or a memory card (registered trademark) read/write device may be used.

The RAM 914 is an example of a volatile memory. The storage media, namely, the ROM 913, the FDD 904, the CDD 905, and the magnetic disk drive 920 are examples of a nonvolatile memory. These devices are examples of a storage device.

The "storage part" described in Embodiments 1 to 6 is realized by the RAM 914, the magnetic disk drive 920, or the like.

The communication board 915, the keyboard 902, the mouse 903, the read device 907, the FDD 904, and the like are examples of an input device.

The communication board 915, the display device 901, the printer device 906, and the like are examples of an output device.

The communication board 915 may be connected to, for example, a LAN (Local Area Network), the Internet, a WAN (Wide Area Network), or a SAN (Storage Area Network) as well, in addition to being connected to other devices.

The magnetic disk drive 920 stores an operating system 921 (OS), a window system 922, programs 923, and files 924.

The CPU 911 executes each program of the programs 923 by utilizing the operating system 921 and the window system 922.

The RAM 914 temporarily stores at least some programs of programs of the operating system 921 and application programs that are executed by the CPU 911.

The RAM 914 stores various types of data necessary for processing by the CPU 911.

The ROM 913 stores a BIOS (Basic Input Output System) program, and the magnetic disk drive 920 stores a boot program.

When the certification device 101, the authentication device 102, or the decryption device 103 is booted, the BIOS program in the ROM 913 and the boot program in the magnetic disk drive 920 are executed, and the BIOS program and the boot program boot the operating system 921.

The programs 923 include programs that execute the functions described as "parts" in the description of Embodiments 1 to 6 (excluding the "storage part"; this applies also to the following explanation). The programs are read and executed by the CPU 911.

The files 924 store, as items of "files" and "databases", information, data, signal values, variable values, and parameters indicating the results of the processes described as "determining", "checking", "generating", "computing", "comparing", "deriving", "extracting", "forming", "updating", "setting", "registering", "selecting", and the like in the description of Embodiments 1 to 6.

The "files" and "databases" are stored in a recording medium such as a disk or a memory. The information, data, signal values, variable values, and parameters stored in the storage medium such as the disk or the memory are read out to a main memory or a cache memory by the CPU 911 through a read/write circuit, and are used for operations of the CPU such as extraction, search, look-up, comparison, calculation, computation, processing, editing, output, printing, and display

During the operations of the CPU including extraction, search, look-up, comparison, calculation, computation, processing, editing, output, printing, and display, the information, data, signal values, variable values, and parameters are temporarily stored in the main memory, a register, the cache memory, a buffer memory, and the like.

The arrows in the flowcharts described in Embodiments 1 to 6 mainly denote inputs/outputs of data and signals. The data and signal values are recorded in a recording medium such as the memory of the RAM 914, the flexible disk of the FDD 904, the compact disc of the CDD 905, the magnetic disk of the magnetic disk drive 920, or other types of recording medium such as an optical disk, a mini disc, and a DVD. The data and signals are transmitted online via the bus 912, a signal line, a cable, or other types of transmission medium.

What is described as a "part" in Embodiments 1 to 6 may be a "circuit", "device", or "equipment", and may also be a "step", "procedure", or "process".

That is, by the steps, procedures, and processes shown in the flowcharts described in Embodiments 1 to 6, the "data processing method" according to the present invention can be realized.

What is described as a "part" may be realized by firmware stored in the ROM 913. Alternatively, what is described as a "part" may be implemented solely by software, or solely by hardware such as an element, a device, a substrate, a wiring line, and the like, or a by a combination of software and hardware, or by a combination further including firmware. The firmware and software are stored as programs in a recording medium such as a magnetic disk, a flexible disk, an optical disk, a compact disc, a mini disc, or a DVD. The programs are read by the CPU 911 and are executed by the CPU 911. That is, each program causes a computer to function as each "part" in Embodiments 1 to 6. Alternatively, each program makes the computer execute a procedure or a method of each "part" in Embodiments 1 to 6.

In this manner, each of the certification device 101, the authentication device 102, and the decryption device 103 presented in Embodiments 1 to 6 is a computer having a CPU which is a processing device; a memory, a magnetic disk or the like which are storage devices; a keyboard, a mouse, a communication board or the like which are input devices; a display device, the communication board or the like which are output devices, and realizes each function described as each "part" by utilizing the processing device, the storage devices, the input devices, and the output devices, as described above.

**Reference Signs List**

| | |
|---|---|
| 101: | certification device |
| 102: | authentication device |
| 103: | decryption device |
| 201: | biometric information extracting part |
| 202: | feature vector forming part |
| 203: | random number generating part |
| 204: | encrypting part |
| 205: | storage part |
| 206: | communication part |
| 301: | storage part |
| 302: | encrypted similarity degree generating part |
| 303: | checking part |
| 304: | communication part |
| 305: | random number generating part |
| 306: | public key updating part |
| 307: | template updating part |
| 401: | parameter generating part |
| 402: | decrypting part |
| 403: | storage part |
| 404: | communication part |

**Claims**

1. A data processing device (102) comprising:

   a public key storage part (301) that stores a public key generated based on a doubly homomorphic encryption algorithm;
   an encrypted data storage part (301) that stores first data encrypted by using the public key as encrypted first data;
   a random number generating part (305) that generates a random number by using at least a part of the public key;
   an encrypted data updating part (307) that performs an arithmetic operation using the random number generated by the random number generating part and updates the encrypted first data; and
   a public key updating part (306) that performs an arithmetic operation using the random number generated by the random number generating part and updates the public key.

**2.** The data processing device according to claim 1,
wherein the random number generating part,
each time a predetermined trigger event occurs, generates the random number by using at least a part of the public key stored in the public key storage part at occurrence of the trigger event,
wherein the public key updating part,
each time the random number is generated by the random number generating part, performs the arithmetic operation using the random number generated by the random number generating part and updates the public key stored in the public key storage part at the occurrence of the trigger event,
wherein the encrypted data updating part,
each time the random number is generated by the random number generating part, performs the arithmetic operation using the random number generated by the random number generating part and updates the encrypted first data stored in the encrypted data storage part at the occurrence of the trigger event,
wherein the public key storage part,
each time the public key is updated by the public key updating part, stores the public key after being updated by overwriting the public key before being updated, and
wherein the encrypted data storage part,
each time the encrypted first data is updated by the encrypted data updating part, stores the encrypted first data after being updated by overwriting the encrypted first data before being updated.

**3.** The data processing device according to claim 2, further comprising:

a public key supply request input part (304) that inputs a public key supply request from an encryption device that encrypts second data by using the public key, the public key supply request being a request for supply of the public key to be used for encrypting the second data,
wherein the random number generating part
determines that the trigger event has occurred when the public key supply request input part inputs the public key supply request from the encryption device, and
each time the public key supply request input part inputs the public key supply request from the encryption device, generates the random number using at least a part of the public key stored in the public key storage part,
wherein the public key updating part,
each time the random number is generated by the random number generating part, performs the arithmetic operation using the random number generated by the random number generating part and updates the public key stored in the public key storage part,
wherein the encrypted data updating part,
each time the random number is generated by the random number generating part, performs the arithmetic operation using the random number generated by the random number generating part and updates the encrypted first data stored in the encrypted data storage part, and
wherein the public key supply request input part
outputs the public key updated by the public key updating part to the encryption device as the public key to be used for encrypting the second data in the encryption device.

**4.** The data processing device according to claim 3, further comprising:

an encrypted data input part (304) that inputs encrypted second data generated by the encryption device by encrypting the second data using the public key after being updated which is output from the public key supply request input part; and
an encrypted similarity degree generating part (302) that performs an arithmetic operation on the encrypted first data stored in the encrypted data storage part and the encrypted second data by using the public key stored in the public key storage part, and generates, as encrypted similarity degree information, encrypted information from which a similarity degree between the first data and the second data can be derived by a decryption process using a secret key corresponding to the public key, with each of the encrypted first data and the encrypted second data being kept as encrypted.

**5.** The data processing device according to claim 4,
wherein the encrypted data storage part
stores encrypted first data constituted by T (T being an integer of 2 or more) pieces of encrypted partial data obtained by encrypting by the encryption device T pieces of partial data constituting the first data,
wherein the encrypted data input part

inputs encrypted second data constituted by T (T being an integer of 2 or more) pieces of encrypted partial data obtained by encrypting by the encryption device T pieces of partial data constituting the second data, and wherein the encrypted similarity degree generating part performs an arithmetic operation on each partial data of the encrypted first data and each partial data of the encrypted second data by using the public key stored in the pubic key storage part, and generates information from which a Hamming distance between the T pieces of partial data of the first data and the T pieces of partial data of the second data can be derived, as the similarity degree between the first data and the second data.

6. The data processing device according to claim 4,
wherein the encrypted data storage part
stores encrypted first data constituted by T (T being an integer of 2 or more) pieces of encrypted partial data obtained by encrypting by the encryption device T pieces of partial data constituting the first data,
wherein the encrypted data input part
inputs encrypted second data constituted by T (T being an integer of 2 or more) pieces of encrypted partial data obtained by encrypting by the encryption device T pieces of data constituting the second data, and
wherein the encrypted similarity degree generating part
performs an arithmetic operation on each partial data of the encrypted first data and each partial data of the encrypted second data by using the public key stored in the pubic key storage part, and generates information from which a Euclidean squared distance between the T pieces of partial data of the first data and the T pieces of partial data of the second data can be derived, as the similarity degree between the first data and the second data.

7. The data processing device according to claim 1,
wherein the encrypted data updating part,
after updating the encrypted first data, erases the random number used for the updating.

8. The data processing device according to claim 1,
wherein the public key storage part
stores a public key generated based on an Okamoto-Takashima encryption algorithm as the public key generated based on the doubly homomorphic encryption algorithm, and
wherein the encrypted data storage part
stores encrypted first data obtained by encryption using the public key generated based on the Okamoto-Takashima encryption algorithm.

9. A data processing method comprising:

storing a public key generated based on a doubly homomorphic encryption algorithm, by a computer;
storing first data encrypted by using the public key as encrypted first data, by the computer;
generating a random number by using at least a part of the public key, by the computer;
performing an arithmetic operation using the random number generated and updating the encrypted first data, by the computer; and
performing an arithmetic operation using the random number generated and updating the public key, by the computer.

10. A program that causes a computer to execute processes comprising:

a public key storage process that stores a public key generated based on a doubly homomorphic encryption algorithm;
an encrypted data storage process that stores first data encrypted by using the public key as encrypted first data;
a random number generating process that generates a random number by using at least a part of the public key;
an encrypted data updating process that performs an arithmetic operation using the random number generated by the random number generating process and updates the encrypted first data; and
a public key updating process that performs an arithmetic operation using the random number generated by the random number generating process and updates the public key.

**Patentansprüche**

1. Datenverarbeitungsvorrichtung (102), umfassend:

ein Element zum Speichern eines öffentlichen Schlüssels (301), das einen öffentlichen Schlüssel speichert, der aufgrund eines doppelt homomorphen Verschlüsselungsalgorithmus erzeugt wird;

ein Element zum Speichern verschlüsselter Daten (301), das erste Daten speichert, verschlüsselt mithilfe des öffentlichen Schlüssels, als verschlüsselte erste Daten;

ein Element zum Erzeugen einer Zufallszahl (305), das eine Zufallszahl mithilfe mindestens eines Teils des öffentlichen Schlüssels erzeugt;

ein Element zum Aktualisieren verschlüsselter Daten (307), das eine Arithmetikoperation mithilfe der Zufallszahl ausführt, die durch das Element zum Erzeugen einer Zufallszahl erzeugt wird, und die verschlüsselten ersten Daten aktualisiert; und

ein Element zum Aktualisieren eines öffentlichen Schlüssels (306), das eine Arithmetikoperation mithilfe der Zufallszahl ausführt, die durch das Element zum Erzeugen einer Zufallszahl erzeugt wird, und den öffentlichen Schlüssel aktualisiert.

2.  Datenverarbeitungsvorrichtung nach Anspruch 1,
    wobei das Element zum Erzeugen einer Zufallszahl
    jedes Mal, wenn ein vorbestimmtes Trigger-Ereignis auftritt, die Zufallszahl beim Auftreten des Trigger-Ereignisses erzeugt, indem mindestens ein Teil des öffentlichen Schlüssels verwendet wird, der in dem Element zum Speichern eines öffentlichen Schlüssels gespeichert ist,
    wobei das Element zum Aktualisieren eines öffentlichen Schlüssels
    jedes Mal, wenn die Zufallszahl durch das Element zum Erzeugen einer Zufallszahl erzeugt wird, die Arithmetikoperation mithilfe der durch das Element zum Erzeugen einer Zufallszahl erzeugten Zufallszahl ausführt und beim Auftreten des Trigger-Ereignisses den in dem Element zum Speichern eines öffentlichen Schlüssels gespeicherten öffentlichen Schlüssel aktualisiert,
    wobei das Element zum Aktualisieren verschlüsselter Daten
    jedes Mal, wenn die Zufallszahl durch das Element zum Erzeugen einer Zufallszahl erzeugt wird, die Arithmetikoperation mithilfe der durch das Element zum Erzeugen einer Zufallszahl erzeugten Zufallszahl ausführt und beim Auftreten des Trigger-Ereignisses die in dem Element zum Speichern verschlüsselter Daten gespeicherten verschlüsselten ersten Daten aktualisiert,
    wobei das Element zum Speichern eines öffentlichen Schlüssels
    jedes Mal, wenn der öffentliche Schlüssel durch das Element zum Aktualisieren eines öffentlichen Schlüssels aktualisiert wird, den öffentlichen Schlüssel speichert nachdem er aktualisiert wurde, indem der vor dem Aktualisieren gespeicherte öffentliche Schlüssel überschrieben wird, und
    wobei das Element zum Speichern verschlüsselter Daten
    jedes Mal, wenn die durch das Element zum Aktualisieren verschlüsselter Daten verschlüsselten ersten Daten aktualisiert werden, die verschlüsselten ersten Daten speichert, nachdem sie aktualisiert wurden, indem die vor dem Aktualisieren gespeicherten verschlüsselten ersten Daten überschrieben werden.

3.  Datenverarbeitungsvorrichtung nach Anspruch 2, die außerdem umfasst:

    ein Element zum Eingeben einer Bereitstellungsanforderung für einen öffentlichen Schlüssel (304), das eine Bereitstellungsanforderung für einen öffentlichen Schlüssel von einer Verschlüsselungsvorrichtung eingibt, die zweite Daten verschlüsselt, indem der öffentliche Schlüssel verwendet wird, wobei die Bereitstellungsanforderung für einen öffentlichen Schlüssel eine Anforderung zum Bereitstellen des öffentlichen Schlüssels ist, der für das Verschlüsseln der zweiten Daten verwendet wird,
    wobei das Element zum Erzeugen einer Zufallszahl
    ermittelt, dass das Trigger-Ereignis aufgetreten ist, wenn das Element zum Eingeben einer Bereitstellungsanforderung für einen öffentlichen Schlüssel die Bereitstellungsanforderung für einen öffentlichen Schlüssel von der Verschlüsselungsvorrichtung eingibt, und
    jedes Mal, wenn das Element zum Eingeben einer Bereitstellungsanforderung für einen öffentlichen Schlüssel die Bereitstellungsanforderung für einen öffentlichen Schlüssel von der Verschlüsselungsvorrichtung eingibt, die Zufallszahl mithilfe mindestens eines Teils des öffentlichen Schlüssels erzeugt, der in dem Element zum Speichern eines öffentlichen Schlüssels gespeichert ist,
    wobei das Element zum Aktualisieren eines öffentlichen Schlüssels
    jedes Mal, wenn die Zufallszahl durch das Element zum Erzeugen einer Zufallszahl erzeugt wird, die Arithmetikoperation mithilfe der durch das Element zum Erzeugen einer Zufallszahl erzeugten Zufallszahl ausführt und den in dem Element zum Speichern eines öffentlichen Schlüssels gespeicherten öffentlichen Schlüssel aktualisiert,
    wobei das Element zum Aktualisieren verschlüsselter Daten

jedes Mal, wenn die Zufallszahl durch das Element zum Erzeugen einer Zufallszahl erzeugt wird, die Arithmetikoperation mithilfe der durch das Element zum Erzeugen einer Zufallszahl erzeugten Zufallszahl ausführt und die in dem Element zum Speichern verschlüsselter Daten gespeicherten verschlüsselten ersten Daten aktualisiert, und

wobei das Element zum Eingeben einer Bereitstellungsanforderung für einen öffentlichen Schlüssel den durch das Element zum Aktualisieren eines öffentlichen Schlüssels aktualisierten öffentlichen Schlüssel an die Verschlüsselungsvorrichtung als den öffentlichen Schlüssel ausgibt, der in der Verschlüsselungsvorrichtung zum Verschlüsseln der zweiten Daten verwendet wird.

4. Datenverarbeitungsvorrichtung nach Anspruch 3, die außerdem umfasst:

ein Element zum Eingeben verschlüsselter Daten (304), das verschlüsselte zweite Daten eingibt, die von der Verschlüsselungsvorrichtung erzeugt werden, indem die zweiten Daten mithilfe des öffentlichen Schlüssels verschlüsselt werden, nachdem er aktualisiert wurde und von dem Element zum Eingeben einer Bereitstellungsanforderung für einen öffentlichen Schlüssel ausgegeben wird; und

ein Element zum Erzeugen eines verschlüsselten Ähnlichkeitsgrads (302), der eine Arithmetikoperation an den in dem Element zum Speichern verschlüsselter Daten gespeicherten verschlüsselten ersten Daten und an den verschlüsselten zweiten Daten mithilfe des öffentlichen Schlüssels ausführt, der in dem Element zum Speichern eines öffentlichen Schlüssels gespeichert ist, und verschlüsselte Informationen als Informationen eines verschlüsselten Ähnlichkeitsgrads erzeugt, aus denen ein Ähnlichkeitsgrad zwischen den ersten Daten und den zweiten Daten durch einen Entschlüsselungsprozess mithilfe eines geheimen Schlüssels abgeleitet werden kann, der dem öffentlichen Schlüssel entspricht, wobei sowohl die verschlüsselten ersten Daten als auch die verschlüsselten zweiten Daten verschlüsselt gehalten werden.

5. Datenverarbeitungsvorrichtung nach Anspruch 4, wobei das Element zum Speichern verschlüsselter Daten verschlüsselte erste Daten speichert, die aus T (wobei T eine ganze Zahl gleich 2 oder größer ist) Teilen verschlüsselter Teildaten besteht, die durch ein Verschlüsseln mithilfe der Verschlüsselungsvorrichtung von T Teilen der Teildaten erhalten werden, welche die ersten Daten bilden, wobei das Element zum Eingeben verschlüsselter Daten verschlüsselte zweite Daten eingibt, die aus T (wobei T eine ganze Zahl gleich 2 oder größer ist) Teilen verschlüsselter Teildaten besteht, die durch ein Verschlüsseln mithilfe der Verschlüsselungsvorrichtung von T Teilen der Teildaten erhalten werden, welche die zweiten Daten bilden, und wobei das Element zum Erzeugen eines verschlüsselten Ähnlichkeitsgrads eine Arithmetikoperation an allen Teildaten der verschlüsselten ersten Daten und an allen Teildaten der verschlüsselten zweiten Daten ausführt, indem der öffentliche Schlüssel verwendet wird, der in dem Element zum Speichern eines öffentlichen Schlüssels gespeichert ist, und Informationen erzeugt, aus denen ein Hamming-Abstand zwischen den T Teilen der Teildaten der ersten Daten und den T Teilen der Teildaten der zweiten Daten als der Ähnlichkeitsgrad zwischen den ersten Daten und den zweiten Daten abgeleitet werden kann.

6. Datenverarbeitungsvorrichtung nach Anspruch 4, wobei das Element zum Speichern verschlüsselter Daten verschlüsselte erste Daten speichert, die aus T (wobei T eine ganze Zahl gleich 2 oder größer ist) Teilen verschlüsselter Teildaten besteht, die durch ein Verschlüsseln mithilfe der Verschlüsselungsvorrichtung von T Teilen der Teildaten erhalten werden, welche die ersten Daten bilden, wobei das Element zum Eingeben verschlüsselter Daten verschlüsselte zweite Daten eingibt, die aus T (wobei T eine ganze Zahl gleich 2 oder größer ist) Teilen verschlüsselter Teildaten besteht, die durch ein Verschlüsseln mithilfe der Verschlüsselungsvorrichtung von T Teilen der Teildaten erhalten werden, welche die zweiten Daten bilden, und wobei das Element zum Erzeugen eines verschlüsselten Ähnlichkeitsgrads eine Arithmetikoperation an allen Teildaten der verschlüsselten ersten Daten und an allen Teildaten der verschlüsselten zweiten Daten ausführt, indem der öffentliche Schlüssel verwendet wird, der in dem Element zum Speichern eines öffentlichen Schlüssels gespeichert ist, und Informationen erzeugt, aus denen ein quadratischer euklidischer Abstand zwischen den T Teilen der Teildaten der ersten Daten und den T Teilen der Teildaten der zweiten Daten als der Ähnlichkeitsgrad zwischen den ersten Daten und den zweiten Daten abgeleitet werden kann.

7. Datenverarbeitungsvorrichtung nach Anspruch 1, wobei das Element zum Aktualisieren verschlüsselter Daten

nach dem Aktualisieren der verschlüsselten ersten Daten die zum Aktualisieren verwendete Zufallszahl löscht.

8. Datenverarbeitungsvorrichtung nach Anspruch 1,
wobei das Element zum Speichern eines öffentlichen Schlüssels
einen öffentlichen Schlüssel, der aufgrund eines Okamoto-Takashima-Verschlüsselungsalgorithmus erzeugt wird, als den öffentlichen Schlüssel speichert, der aufgrund des doppelt homomorphen Verschlüsselungsalgorithmus erzeugt wird; und
wobei das Element zum Speichern verschlüsselter Daten
die verschlüsselten ersten Daten speichert, die durch eine Verschlüsselung mithilfe des öffentlichen Schlüssels erhalten werden, der aufgrund des Okamoto-Takashima-Verschlüsselungsalgorithmus erhalten wird.

9. Datenverarbeitungsverfahren, umfassend:

Speichern eines öffentlichen Schlüssels, der aufgrund eines doppelt homomorphen Verschlüsselungsalgorithmus durch einen Computer erzeugt wird;
Speichern erster Daten, verschlüsselt mithilfe des öffentlichen Schlüssels, als verschlüsselte erste Daten, durch den Computer;
Erzeugen einer Zufallszahl durch den Computer, indem mindestens ein Teil des öffentlichen Schlüssels verwendet wird;
Ausführen einer Arithmetikoperation mithilfe der erzeugten Zufallszahl und Aktualisieren der verschlüsselten ersten Daten durch den Computer; und
Ausführen einer Arithmetikoperation mithilfe der erzeugten Zufallszahl und Aktualisieren des öffentlichen Schlüssels durch den Computer.

10. Programm, das einen Computer veranlasst, Prozesse auszuführen, welche die folgenden Prozesse umfassen:

einen Speicherprozess für einen öffentlichen Schlüssel, der einen öffentlichen Schlüssel speichert, der aufgrund eines doppelt homomorphen Verschlüsselungsalgorithmus erzeugt wird;
einen Speicherprozess für verschlüsselte Daten, der erste Daten als verschlüsselte erste Daten speichert, die mithilfe des öffentlichen Schlüssels verschlüsselt werden;
einen Erzeugungsprozess für eine Zufallszahl, der eine Zufallszahl mithilfe mindestens eines Teils des öffentlichen Schlüssels erzeugt;
einen Aktualisierungsprozess für verschlüsselte Daten, der eine Arithmetikoperation mithilfe der Zufallszahl ausführt, die durch den Erzeugungsprozess für eine Zufallszahl erzeugt wird, und die verschlüsselten ersten Daten aktualisiert; und
einen Aktualisierungsprozess für einen öffentlichen Schlüssel, der eine Arithmetikoperation mithilfe der Zufallszahl ausführt, die durch den Erzeugungsprozess für eine Zufallszahl erzeugt wird, und den öffentlichen Schlüssel aktualisiert.

**Revendications**

1. Dispositif de traitement de données (102) comprenant :

une partie stockage de clé publique (301) qui stocke une clé publique générée sur la base d'un algorithme de chiffrement doublement homomorphe ;
une partie stockage de données chiffrées (301) qui stocke des premières données chiffrées en utilisant la clé publique en tant que premières données chiffrées ;
une partie génération de nombre aléatoire (305) qui génère un nombre aléatoire en utilisant une partie au moins de la clé publique ;
une partie mise à jour des données chiffrées (307) qui exécute une opération arithmétique en utilisant le nombre aléatoire généré par la partie génération de nombre aléatoire, et qui met à jour les premières données chiffrées ; et
une partie mise à jour de clé publique (306) qui exécute une opération arithmétique en utilisant le nombre aléatoire généré par la partie génération de nombre aléatoire, et qui met à jour la clé publique.

2. Dispositif de traitement de données selon la revendication 1,
dans lequel la partie génération de nombre aléatoire,

chaque fois que se produit un événement de déclenchement prédéterminé, génère le nombre aléatoire en utilisant une partie au moins de la clé publique stockée dans la partie stockage de clé publique lors de l'occurrence de l'événement de déclenchement ;

dans lequel la partie mise à jour de clé publique,

chaque fois que le nombre aléatoire est généré par la partie génération de nombre aléatoire, exécute l'opération arithmétique en utilisant le nombre aléatoire généré par la partie génération de nombre aléatoire, et met à jour la clé publique stockée dans la partie stockage de clé publique lors de l'occurrence de l'événement de déclenchement ;

dans lequel la partie mise à jour des données chiffrées,

chaque fois que le nombre aléatoire est généré par la partie génération de nombre aléatoire, exécute l'opération arithmétique en utilisant le nombre aléatoire généré par la partie génération de nombre aléatoire, et met à jour les premières données chiffrées stockées dans la partie stockage de données chiffrées lors de l'occurrence de l'événement de déclenchement ;

dans lequel la partie stockage de clé publique,

chaque fois que la clé publique est mise à jour par la partie mise à jour de clé publique, stocke la clé publique après sa mise à jour en écrasant la clé publique avant sa mise à jour ; et

dans lequel la partie stockage de données chiffrées,

chaque fois que les premières données chiffrées sont mises à jour par la partie mise à jour de données chiffrées, stocke les premières données chiffrées après leur mise à jour en écrasant les premières données chiffrées avant leur mise à jour.

3. Dispositif de traitement de données selon la revendication 2, comprenant en outre :

une partie entrée de demande de fourniture de clé publique (304) qui entre une demande de fourniture de clé publique en provenance d'un dispositif de chiffrement qui chiffre des secondes données en utilisant la clé publique, la demande de fourniture de clé publique étant une demande de fourniture de la clé publique à utiliser de façon à chiffrer les secondes données ;

dans lequel la partie génération de nombre aléatoire

détermine que l'événement de déclenchement s'est produit lorsque la partie entrée de demande de fourniture de clé publique entre la demande de fourniture de clé publique en provenance du dispositif de chiffrement ; et

chaque fois que la partie entrée de demande de fourniture de clé publique entre la demande de fourniture de clé publique en provenance du dispositif de chiffrement, génère le nombre aléatoire en utilisant une partie au moins de la clé publique stockée dans la partie stockage de clé publique ;

dans lequel la partie mise à jour de clé publique,

chaque fois que le nombre aléatoire est généré par la partie génération de nombre aléatoire, exécute l'opération arithmétique en utilisant le nombre aléatoire généré par la partie génération de nombre aléatoire, et met à jour la clé publique stockée dans la partie stockage de clé publique ;

dans lequel la partie mise à jour des données chiffrées,

chaque fois que le nombre aléatoire est généré par la partie génération de nombre aléatoire, exécute l'opération arithmétique en utilisant le nombre aléatoire généré par la partie génération de nombre aléatoire, et met à jour les premières données chiffrées stockées dans la partie stockage de données chiffrées ; et

dans lequel la partie entrée de demande de fourniture de clé publique

délivre en sortie la clé publique mise à jour par la partie mise à jour de clé publique, au dispositif de chiffrement en tant que clé publique à utiliser de façon à chiffrer les secondes données dans le dispositif de chiffrement.

4. Dispositif de traitement de données selon la revendication 3, comprenant en outre :

une partie entrée de données chiffrées (304) qui entre des secondes données chiffrées générées par le dispositif de chiffrement en chiffrant les secondes données en utilisant la clé publique après sa mise à jour, qui est délivrée en sortie par la partie entrée de demande de fourniture de clé publique ; et

une partie génération de degré de similitude chiffré (302) qui exécute une opération arithmétique sur les premières données chiffrées stockées dans la partie stockage de données chiffrées, et sur les secondes données chiffrées, en utilisant la clé publique stockée dans la partie stockage de clé publique, et qui génère, en tant qu'informations de degré de similitude chiffré, les informations chiffrées à partir desquelles un degré de similitude entre les premières données et les secondes données peut être obtenu grâce a un processus de déchiffrement en utilisant une clé secrète qui correspond à la clé publique, les premières données chiffrées et les secondes données chiffrées étant conservées chiffrées.

5. Dispositif de traitement de données selon la revendication 4,

dans lequel la partie stockage de données chiffrées

stocke des premières données chiffrées constituées par T (T étant un nombre entier égal ou supérieur à 2) éléments de données partielles chiffrées obtenues en chiffrant, grâce au dispositif de chiffrement, T éléments de données partielles qui constituent les premières données ;

dans lequel la partie entrée de données chiffrées

entre des secondes données chiffrées constituées par T (T étant un nombre entier égal ou supérieur à 2) éléments de données partielles chiffrées obtenues en chiffrant, grâce au dispositif de chiffrement, T éléments de données partielles qui constituent les secondes données ; et

dans lequel la partie génération de degré de similitude chiffré

exécute une opération arithmétique sur chaque donnée partielle des premières données chiffrées et sur chaque donnée partielle des secondes données chiffrées en utilisant la clé publique stockée dans la partie stockage de clé publique, et génère des informations à partir desquelles il est possible d'obtenir une distance de Hamming entre les T éléments de données partielles des premières données, et les T éléments de données partielles des secondes données, en tant que degré de similitude entre les premières données et les secondes données.

6. Dispositif de traitement de données selon la revendication 4,

dans lequel la partie stockage de données chiffrées

stocke les premières données chiffrées constituées par T (T étant un nombre entier égal ou supérieur à 2) éléments de données partielles chiffrées obtenues en chiffrant, grâce au dispositif de chiffrement, T éléments de données partielles qui constituent les premières données ;

dans lequel la partie entrée de données chiffrées

entre des secondes données chiffrées constituées par T (T étant un nombre entier égal ou supérieur à 2) éléments de données partielles chiffrées obtenues en chiffrant, grâce au dispositif de chiffrement, T éléments de données qui constituent les secondes données ; et

dans lequel la partie génération de degré de similitude chiffré

exécute une opération arithmétique sur chaque donnée partielle des premières données chiffrées et sur chaque donnée partielle des secondes données chiffrées en utilisant la clé publique stockée dans la partie stockage de clé publique, et génère des informations à partir desquelles il est possible d'obtenir une distance euclidienne élevée au carré entre les T éléments de données partielles des premières données, et les T éléments de données partielles des secondes données, en tant que degré de similitude entre les premières données et les secondes données.

7. Dispositif de traitement de données selon la revendication 1,

dans lequel la partie mise à jour des données chiffrées,

après avoir mis à jour les premières données chiffrées, efface le nombre aléatoire utilisé pour la mise à jour.

8. Dispositif de traitement de données selon la revendication 1,

dans lequel la partie stockage de clé publique

stocke une clé publique générée sur la base d'un algorithme de chiffrement de Okamoto Takashima en tant que clé publique générée sur la base de l'algorithme de chiffrement doublement homomorphe ; et

dans lequel la partie stockage de données chiffrées

stocke les premières données chiffrées obtenues par chiffrement en utilisant la clé publique générée sur la base de l'algorithme de chiffrement de Okamoto Takashima.

9. Procédé de traitement de données comprenant les étapes consistant à :

stocker une clé publique générée sur la base de l'algorithme de chiffrement doublement homomorphe, à l'aide d'un ordinateur ;

stocker des premières données chiffrées en utilisant la clé publique en tant que premières données chiffrées, à l'aide de l'ordinateur ;

générer un nombre aléatoire en utilisant une partie au moins de la clé publique, à l'aide de l'ordinateur ;

exécuter une opération arithmétique en utilisant le nombre aléatoire généré et mettre à jour les premières données chiffrées, à l'aide de l'ordinateur ; et

exécuter une opération arithmétique en utilisant le nombre aléatoire généré et mettre à jour la clé publique, à l'aide de l'ordinateur.

10. Programme destiné à faire exécuter par un ordinateur des processus qui comprennent :

un processus stockage de clé publique qui stocke une clé publique générée sur la base d'un algorithme de chiffrement doublement homomorphe ;

un processus stockage de données chiffrées qui stocke des premières données chiffrées en utilisant la clé publique en tant que premières données chiffrées ;

un processus génération de nombre aléatoire qui génère un nombre aléatoire en utilisant une partie au moins de la clé publique ;

un processus mise à jour des données chiffrées qui exécute une opération arithmétique en utilisant le nombre aléatoire généré par le processus génération de nombre aléatoire, et qui met à jour les premières données chiffrées ; et

un processus mise à jour de clé publique qui exécute une opération arithmétique en utilisant le nombre aléatoire généré par le processus génération de nombre aléatoire, et qui met à jour la clé publique.

# Fig. 1

101

102

103

| CERTIFICATION DEVICE (ENCRYPTION DEVICE) | AUTHENTICATION DEVICE (DATA PROCESSING DEVICE) | DECRYPTION DEVICE |

# Fig. 2

101

**CERTIFICATION DEVICE (ENCRYPTION DEVICE)**

| BIOMETRIC INFORMATION EXTRACTING PART | 201 |
| FEATURE VECTOR FORMING PART | 202 |
| RANDOM NUMBER GENERATING PART | 203 |
| ENCRYPTING PART | 204 |
| STORAGE PART | 205 |
| COMMUNICATION PART | 206 |

# Fig. 3

102

AUTHENTICATION  DEVICE  (DATA PROCESSING DEVICE)

STORAGE PART
(PUBLIC KEY STORAGE PART)
(ENCRYPTED DATA STORAGE PART)

301

ENCRYPTED SIMILARITY DEGREE
GENERATING PART

302

CHECKING PART

303

COMMUNICATION PART
(ENCRYPTED DATA INPUT PART)
(PUBLIC KEY SUPPLY REQUEST INPUT PART)

304

RANDOM NUMBER GENERATING PART

305

PUBLIC KEY UPDATING PART

306

TEMPLATE UPDATING PART
(ENCRYPTED DATA UPDATING PART)

307

# Fig. 4

103

## DECRYPTION DEVICE

| PARAMETER GENERATING PART | 401 |

| DECRYPTING PART | 402 |

| STORAGE PART | 403 |

| COMMUNICATION PART | 404 |

# Fig. 5

START OF TEMPLATE UPDATING

TAKE VALUE $\delta$ UNIFORMLY RANDOMLY
FROM INTEGERS FROM 0 TO $q$-1 — S501

USING EXISTING RANDOM BASES $W = (w_1, w_2, w_3)$ AND
$W^\wedge = (w^\wedge_1, w^\wedge_2, w^\wedge_3)$, EXISTING PUBLIC KEY PARAMETER
$e(g, g^\wedge)$, AND $\delta$, SET NEW PUBLIC KEY PARAMETER
$e(g, g^\wedge)^+ = e(\delta g, \delta g^\wedge)$ AND NEW RANDOM BASES
$W = (\delta w_1, \delta w_2, \delta w_3)$ AND $W^{\wedge+} = (\delta w^\wedge_1, \delta w^\wedge_2, \delta w^\wedge_3)$ — S502

USING EXISTING TEMPLATE $C = (c_1, c_2, ..., c_T)$ AND $\delta$,
COMPUTE NEW TEMPLATE $C^+ = (\delta c_1, \delta c_2, ..., \delta c_T)$ AND
OVERWRITE EXISTING TEMPLATE — S503

ERASE $\delta$ — S504

MAKE PUBLIC NEW PUBLIC KEY PARAMETER $e(g, g^\wedge)^+$
AND NEW RANDOM BASES $W^+ = (\delta w_1, \delta w_2, \delta w_3)$ AND
$W^{\wedge+} = (\delta w^\wedge_1, \delta w^\wedge_2, \delta w^\wedge_3)$ — S505

END

# Fig. 6

$$\boxed{\text{START OF TEMPLATE UPDATING}}$$

$$\boxed{\begin{array}{c}\text{TAKE VALUE } \delta \text{ UNIFORMLY RANDOMLY}\\ \text{FROM INTEGERS FROM 0 TO } q\text{-1}\end{array}} \quad\text{S601}$$

$$\boxed{\begin{array}{l}\text{USING EXISTING PUBLIC KEY } ((G, G_T, N, e), g, h, e(g,g))\\ \text{AND } \delta, \text{ SET NEW PUBLIC KEY } ((G, G_T, N, e), g^\delta, h^\delta, e(g,g)^{\delta^2})\end{array}} \quad\text{S602}$$

$$\boxed{\begin{array}{l}\text{USING EXISTING TEMPLATE C} = (c_1, c_2, ..., c_T) \text{ AND } \delta,\\ \text{COMPUTE NEW TEMPLATE C}^+ = (c^\delta_1, c^\delta_2, ..., c^\delta_T) \text{ AND}\\ \text{OVERWRITE EXISTING TEMPLATE}\end{array}} \quad\text{S603}$$

$$\boxed{\text{ERASE } \delta} \quad\text{S604}$$

$$\boxed{\text{MAKE PUBLIC NEW PUBLIC KEY } ((G, G_T, N, e), g^\delta, h^\delta, e(g,g)^{\delta^2})} \quad\text{S605}$$

$$\boxed{\text{END}}$$

# Fig. 7

$$\boxed{\text{START OF AUTHENTICATION}}$$

| CERTIFICATION DEVICE TRANSMITS AUTHENTICATION REQUEST TO AUTHENTICATION DEVICE | S701 |

| AUTHENTICATION DEVICE TAKES VALUE $\delta$ UNIFORMLY RANDOMLY FROM INTEGERS FROM 0 TO $q$-1 | S702 |

USING EXISTING PUBLIC KEY PARAMETER $e(g,g^\wedge)$, EXISTING RANDOM BASES $W = (w_1, w_2, w_3)$ AND $W^\wedge = (w^\wedge_1, w^\wedge_2, w^\wedge_3)$, AND $\delta$, AUTHENTICATION DEVICE SETS NEW PUBLIC KEY PARAMETER $e(g, g^\wedge)^+ = e(\delta g, \delta g^\wedge)$ AND NEW RANDOM BASES $W^+ = (\delta w_1, \delta w_2, \delta w_3)$ AND $W^{\wedge+} = (\delta w^\wedge_1, \delta w^\wedge_2, \delta w^\wedge_3)$  — S703

USING EXISTING TEMPLATE $C = (c_1, c_2, ..., c_T)$ AND $\delta$, AUTHENTICATION DEVICE COMPUTES NEW TEMPLATE $C^+ = (\delta c_1, \delta c_2, ..., \delta c_T)$ AND OVERWRITES EXISTING TEMPLATE  — S704

| AUTHENTICATION DEVICE ERASES $\delta$ | S705 |

AUTHENTICATION DEVICE MAKES PUBLIC NEW PUBLIC KEY PARAMETER $e(g, g^\wedge)^+$ AND NEW RANDOM BASES $W^+ = (\delta w_1, \delta w_2, \delta w_3)$ AND $W^{\wedge+} = (\delta w^\wedge_1, \delta w^\wedge_2, \delta w^\wedge_3)$  — S706

USING PUBLIC KEY INCLUDING NEW PUBLIC KEY PARAMETER AND NEW RANDOM BASES AS NEW PUBLIC KEY, CERTIFICATION DEVICE PERFORMS AUTHENTICATION IN ACCORDANCE WITH AUTHENTICATION METHOD DESCRIBED IN EMBODIMENT 2 OF PATENT LITERATURE 1  — S707

$$\boxed{\text{END}}$$

# Fig. 8

( START OF AUTHENTICATION )

↓

CERTIFICATION DEVICE TRANSMITS AUTHENTICATION REQUEST TO AUTHENTICATION DEVICE — S801

↓

AUTHENTICATION DEVICE TAKES VALUE $\delta$ UNIFORMLY RANDOMLY FROM INTEGERS FROM 0 TO q-1 — S802

↓

USING PUBLIC KEY $((G, G_T, N, e), g, h, e(g, g))$ AND $\delta$, AUTHENTICATION DEVICE SETS NEW PUBLIC KEY $((G, G_T, N, e), g^\delta, h^\delta, e(g, g)^{\delta^2})$ — S803

↓

USING EXISTING TEMPLATE $C = (c_1, c_2, ..., c_T)$ AND $\delta$, AUTHENTICATION DEVICE COMPUTES NEW TEMPLATE $C^+ = (c^\delta_1, c^\delta_2, ..., c^\delta_T)$ AND OVERWRITES EXISTING TEMPLATE — S804

↓

AUTHENTICATION DEVICE ERASES $\delta$ — S805

↓

AUTHENTICATION DEVICE MAKES PUBLIC NEW PUBLIC KEY $((G, G_T, N, e), g^\delta, h^\delta, e(g,g)^{\delta^2})$ — S806

↓

USING NEW PUBLIC KEY, CERTIFICATION DEVICE PERFORMS AUTHENTICATION IN ACCORDANCE WITH AUTHENTICATION METHOD DESCRIBED IN EMBODIMENT 4 OF PATENT LITERATURE 1 — S807

↓

( END )

# Fig. 9

$$\left(\text{START OF PARAMETER GENERATION}\right)$$

---

SET GROUP ORDER q, GROUPS G, G^, AND G_T, AND GENERATORS
g ∈ G AND g^ ∈ G^ — S901

---

SET CANONICAL BASES A = (a_1, a_2, a_3) AND A^ = (a^_1, a^_2, a^_3)
FOR VECTOR SPACES V = G × G × G AND V^ = G^ × G^ × G^ — S902

---

TAKE VALUE NINE TIMES UNIFORMLY RANDOMLY FROM
INTEGERS FROM 0 TO q-1 AND SET 3-ROW 3-COLUMN
MATRIX X = (x_{i,j}) USING OBTAINED VALUES — S903

---

TAKE VALUE NINE TIMES UNIFORMLY RANDOMLY FROM
INTEGERS FROM 0 TO q-1 AND SET 3-ROW 3-COLUMN
MATRIX X^ = (x^_{i,j}) USING OBTAINED VALUES — S904

---

BASED ON $\quad b_i = \sum_{j=1}^{3} X_{i,j} a_j \quad$ AND $\quad \hat{b}_i = \sum_{j=1}^{3} \hat{X}_{i,j} \hat{a}_j$ , — S905

SET RANDOM BASES W = ( w_1, w_2, w_3) AND W^ = (w^_1, w^_2, w^_3)

---

MAKE PUBLIC PUBLIC KEY pk = (q, V, V^, e, G_T, A, A^, W, W^, e(g, g^ ))
AND STORE SECRET KEY sk = (X, X^) IN STORAGE PART — S906

---

$$\left(\text{END}\right)$$

# Fig. 10

$$\text{START OF BIOMETRIC INFORMATION REGISTRATION}$$

BIOMETRIC INFORMATION EXTRACTING PART EXTRACTS BIOMETRIC INFORMATION OF USER  — S1001

FEATURE VECTOR FORMING PART FORMS FEATURE VECTOR

$b = (b_1, b_2, \ldots, b_T)$ FROM BIOMETRIC INFORMATION  — S1002

RANDOM NUMBER GENERATING PART TAKES VALUE 4T TIMES

UNIFORMLY RANDOMLY FROM INTEGERS FROM 0 TO q-1 AND SET

OBTAINED VALUES AS $\left\{ r_{2,i}, r_{3,i}, \hat{r}_{2,i}, \hat{r}_{3,i} \right\}_{i=1,2,\ldots,T}$  — S1003

BASED ON $c_i = b_i w_1 + r_{2,i} w_2 + r_{3,i} w_3, \hat{c}_i = b_i \hat{w}_1 + \hat{r}_{2,i} \hat{w}_2 + \hat{r}_{3,i} \hat{w}_3,$

ENCRYPTING PART COMPUTES $C = (c_1, c_2, \ldots, c_T), \hat{C} = (\hat{c}_1, \hat{c}_2, \ldots, \hat{c}_T)$  — S1004

COMMUNICATION PART TRANSMITS

$C = (c_1, c_2, \ldots, c_T), \hat{C} = (\hat{c}_1, \hat{c}_2, \ldots, \hat{c}_T)$ TO AUTHENTICATION DEVICE  — S1005

AUTHENTICATION DEVICE STORES $C = (c_1, c_2, \ldots, c_T), \hat{C} = (\hat{c}_1, \hat{c}_2, \ldots, \hat{c}_T)$ IN STORAGE PART  — S1006

$$\text{END}$$

# Fig. 11

START OF AUTHENTICATION

BIOMETRIC INFORMATION EXTRACTING PART OF CERTIFICATION DEVICE EXTRACTS BIOMETRIC INFORMATION OF USER — S1101

FEATURE VECTOR FORMING PART OF CERTIFICATION DEVICE FORMS FEATURE VECTOR $b' = (b'_1, b'_2, \ldots, b'_T)$ FROM BIOMETRIC INFORMATION — S1102

RANDOM NUMBER GENERATING PART OF CERTIFICATION DEVICE TAKES VALUE 4T TIMES UNIFORMLY RANDOMLY FROM INTEGERS FROM 0 TO q-1 AND SETS OBTAINED VALUES AS $\left\{ r'_{2,i}, r'_{3,i}, \hat{r}'_{2,i}, \hat{r}'_{3,i} \right\}_{i=1,2,\ldots,T}$ — S1103

BASED ON $c'_i = b'_i w_1 + r'_{2,i} w_2 + r'_{3,i} w_3, \hat{c}'_i = b'_i \hat{w}_1 + r'_{2,i} \hat{w}_2 + r'_{3,i} \hat{w}_3$ ENCRYPTING PART OF CERTIFICATION DEVICE COMPUTES $C' = (c'_1, c'_2, \ldots, c'_T), \hat{C}' = (\hat{c}'_1, \hat{c}'_2, \ldots, \hat{c}'_T)$ — S1104

COMMUNICATION PART OF CERTIFICATION DEVICE TRANSMITS $C' = (c'_1, c'_2, \ldots, c'_T), \hat{C}' = (\hat{c}'_1, \hat{c}'_2, \ldots, \hat{c}'_T)$ TO AUTHENTICATION DEVICE — S1105

TO STEP S1106

# Fig. 12

FROM STEP S1105

COMMUNICATION PART OF AUTHENTICATION DEVICE RECEIVES
$C' = (c'_1, c'_2, \ldots, c'_T), \hat{C}' = (\hat{c}'_1, \hat{c}'_2, \ldots, \hat{c}'_T)$ — S1106

AUTHENTICATION DEVICE TAKES $C = (c_1, c_2, \ldots, c_T), \hat{C} = (\hat{c}_1, \hat{c}_2, \ldots, \hat{c}_T)$ FROM STORAGE PART — S1107

RANDOM NUMBER GENERATING PART OF AUTHENTICATION DEVICE TAKES VALUE 6T TIMES UNIFORMLY RANDOMLY FROM INTEGERS FROM 0 TO q-1 AND SETS OBTAINED VALUES AS
$$\left\{ s_{1,i}, s_{2,i}, s_{3,i}, \hat{s}_{1,i}, \hat{s}_{2,i}, \hat{s}_{3,i} \right\}_{i=1,2,\ldots,T}$$ — S1108

RANDOM NUMBER GENERATING PART OF AUTHENTICATION DEVICE TAKES VALUE FOUR TIMES UNIFORMLY RANDOMLY FROM INTEGERS FROM 0 TO q-1 AND SETS OBTAINED VALUES AS $\left\{ u_2, u_3, \hat{u}_2, \hat{u}_3 \right\}$ — S1109

ENCRYPTED SIMILARITY DEGREE GENERATING PART OF AUTHENTICATION DEVICE COMPUTES
$$d_i = (c_i - c'_i) + s_{1,i} w_1 + s_{2,i} w_2 + s_{3,i} w_3$$ — S1110

ENCRYPTED SIMILARITY DEGREE GENERATING PART OF AUTHENTICATION DEVICE COMPUTES
$$\hat{d}_i = (\hat{c}_i - \hat{c}'_i) + \hat{s}_{1,i} \hat{w}_1 + \hat{s}_{2,i} \hat{w}_2 + \hat{s}_{3,i} \hat{w}_3$$ — S1111

ENCRYPTED SIMILARITY DEGREE GENERATING PART OF AUTHENTICATION DEVICE COMPUTES
$$E = \sum_{i=1}^{T} (\hat{s}_{1,i}(c_i - c'_i) + s_{1,i}\hat{s}_{1,i} w_1) + u_2 w_2 + u_3 w_3$$ — S1112

ENCRYPTED SIMILARITY DEGREE GENERATING PART OF AUTHENTICATION DEVICE COMPUTES
$$\hat{E} = \sum_{i=1}^{T} s_{1,i}(\hat{c}_i - \hat{c}'_i) + \hat{u}_2 \hat{w}_2 + \hat{u}_3 \hat{w}_3$$ — S1113

COMMUNICATION PART OF AUTHENTICATION DEVICE TRANSMITS
$(d_1, \ldots, d_T, \hat{d}_1, \ldots \hat{d}_T, E, \hat{E})$ TO DECRYPTION DEVICE — S1114

TO STEP S715

# Fig. 13

( FROM STEP S1114 )

COMMUNICATION PART OF DECRYPTION DEVICE RECEIVES $(d_1,\ldots,d_T,\hat{d}_1,\ldots\hat{d}_T,E,\hat{E})$ — S715

DECRYPTION DEVICE TAKES SECRET KEYS X AND X^ FROM STORAGE PART — S716

DECRYPTION DEVICE COMPUTES INVERSE MATRIX $(t_{i,j})$ OF X AND INVERSE MATRIX $(t^{\wedge}_{i,j})$ OF X^ — S717

DECRYPTION DEVICE COMPUTES
$$Z_1 = \prod_{i=1}^{T} e(Deco(d_i,\langle w_1\rangle,X),Deco(\hat{d}_i,\langle\hat{w}_1\rangle,\hat{X}))$$
— S718

DECRYPTION DEVICE COMPUTES
$$Z_2 = e(Deco(E,\langle w_1\rangle,X),\hat{b}_1)\cdot e(b_1,Deco(\hat{E},\langle\hat{w}_1\rangle,\hat{X}))$$
— S719

DECRYPTION DEVICE COMPUTES $Z = Z_1/Z_2$ — S720

DECRYPTION DEVICE COMPUTES DISCRETE LOGARITHM d OF Z HAVING BASE $e(g, g^{\wedge})$ — S721

COMMUNICATION PART OF DECRYPTION DEVICE TRANSMITS d TO AUTHENTICATION DEVICE — S722

COMMUNICATION PART OF AUTHENTICATION DEVICE RECEIVES d — S723

S724
$d \geq$ THRESHOLD?  NO

YES

DETERMINE AS CORRECT PERSON

DETERMINE AS DIFFERENT PERSON

( END )

# Fig. 14

$$\left(\text{START OF PARAMETER GENERATION}\right)$$

SET PRIME NUMBERS p AND q AND GROUPS G AND $G_T$ AND COMPUTE N = pq — S1301

SELECT g AND u UNIFORMLY RANDOMLY FROM G AND COMPUTE h = $u^q$ — S1302

MAKE PUBLIC PUBLIC KEY pk = (( G, $G_T$, N, e), g, h, e(g, g)) AND STORE SECRET KEY sk = p IN STORAGE PART — S1303

$$\left(\text{END}\right)$$

# Fig. 15

START OF BIOMETRIC INFORMATION REGISTRATION

BIOMETRIC INFORMATION EXTRACTING PART EXTRACTS BIOMETRIC INFORMATION OF USER — S1401

FEATURE VECTOR FORMING PART FORMS FEATURE VECTOR $b = (b_1, b_2, \ldots, b_T)$ FROM BIOMETRIC INFORMATION — S1402

RANDOM NUMBER GENERATING PART TAKES VALUE T TIMES UNIFORMLY RANDOMLY FROM INTEGERS FROM 0 TO N-1 AND SETS OBTAINED VALUES AS $\{r_i\}_{i=1,2,\ldots,T}$ — S1403

BASED ON $c_i = g^{b_i} h^{r_i}$, ENCRYPTING PART COMPUTES $C = (c_1, c_2, \ldots, c_T)$ — S1404

COMMUNICATION PART TRANSMITS $C = (c_1, c_2, \ldots, c_T)$ TO AUTHENTICATION DEVICE — S1405

AUTHENTICATION DEVICE STORES $C = (c_1, c_2, \ldots, c_T)$ IN STORAGE PART — S1406

END

# Fig. 16

$$\left(\ \text{START OF AUTHENTICATION}\ \right)$$

BIOMETRIC INFORMATION EXTRACTING PART OF CERTIFICATION DEVICE EXTRACTS BIOMETRIC INFORMATION OF USER | S1801

FEATURE VECTOR FORMING PART OF CERTIFICATION DEVICE FORMS FEATURE VECTOR $b' = (b'_1, b'_2, \ldots, b'_T)$ FROM BIOMETRIC INFORMATION | S1802

RANDOM NUMBER GENERATING PART OF CERTIFICATION DEVICE TAKES VALUE T TIMES UNIFORMLY RANDOMLY FROM INTEGERS FROM 0 TO N-1 AND SET OBTAINED VALUES AS $\{r'_i\}_{i=1,2,\ldots,T}$ | S1803

BASED ON $c'_i = g^{b'_i} h^{r'_i}$, ENCRYPTING PART OF CERTIFICATION DEVICE COMPUTES $C' = (c'_1, c'_2, \ldots, c'_T)$ | S1804

COMMUNICATION PART OF CERTIFICATION DEVICE TRANSMITS $C' = (c'_1, c'_2, \ldots, c'_T)$ TO AUTHENTICATION DEVICE | S1805

$$\left(\ \text{TO STEP S1806}\ \right)$$

# Fig. 17

$$\text{FROM STEP S1805}$$

COMMUNICATION PART OF AUTHENTICATION DEVICE
RECEIVES $C' = (c'_1, c'_2, \ldots, c'_T)$ —— S1806

AUTHENTICATION DEVICE TAKES $C = (c_1, c_2, \ldots, c_T)$ —— S1807
FROM STORAGE PART

RANDOM NUMBER GENERATING PART OF —— S1808
AUTHENTICATION DEVICE TAKES VALUE UNIFORMLY
RANDOMLY FROM INTEGERS FROM 0 TO N-1 AND SETS
OBTAINED VALUE AS s

ENCRYPTED SIMILARITY DEGREE GENERATING PART —— S1809
OF AUTHENTICATION DEVICE COMPUTES

$$E = \prod_{i=1}^{T} e(c_i, g) \cdot e(c'_i, g) \cdot e(c_i, c'_i)^{-2} \cdot e(g, h)^s$$

COMMUNICATION PART OF AUTHENTICATION DEVICE —— S1810
TRANSMITS E TO DECRYPTION DEVICE

$$\text{TO STEP S1811}$$

# Fig. 18

```
        ( FROM STEP S1810 )
                 │
                 ▼
┌─────────────────────────────────────────────────────┐
│ COMMUNICATION PART OF DECRYPTION DEVICE              │ ─── S1811
│ RECEIVES E                                           │
└─────────────────────────────────────────────────────┘
                 │
                 ▼
┌─────────────────────────────────────────────────────┐
│ DECRYPTION DEVICE TAKES SECRET KEY p FROM            │ ─── S1812
│ STORAGE PART                                         │
└─────────────────────────────────────────────────────┘
                 │
                 ▼
┌─────────────────────────────────────────────────────┐
│ DECRYPTION DEVICE COMPUTES Z = Eᵖ                    │ ─── S1813
└─────────────────────────────────────────────────────┘
                 │
                 ▼
┌─────────────────────────────────────────────────────┐
│ DECRYPTION DEVICE COMPUTES DISCRETE LOGARITHM        │ ─── S1814
│ d OF Z HAVING BASE e(g, g)ᵖ                          │
└─────────────────────────────────────────────────────┘
                 │
                 ▼
┌─────────────────────────────────────────────────────┐
│ COMMUNICATION PART OF DECRYPTION DEVICE              │ ─── S1815
│ TRANSMITS d TO AUTHENTICATION DEVICE                 │
└─────────────────────────────────────────────────────┘
                 │
                 ▼
┌─────────────────────────────────────────────────────┐
│ COMMUNICATION PART OF AUTHENTICATION DEVICE          │ ─── S1816
│ RECEIVES d                                           │
└─────────────────────────────────────────────────────┘
                 │
                 ▼
           S1817
        ╱─────────────╲           NO
       <  d ≥ THRESHOLD? >──────────┐
        ╲─────────────╱             │
                 │ YES              │
                 ▼                  ▼
     ┌──────────────┐     ┌──────────────────┐
     │ DETERMINE AS │     │ DETERMINE AS     │
     │ CORRECT PERSON│     │ DIFFERENT PERSON │
     └──────────────┘     └──────────────────┘
                 │              │
                 ▼              ▼
              (    END    )
```

Decryption device computes $Z = E^p$

Decryption device computes discrete logarithm $d$ of $Z$ having base $e(g, g)^p$

# Fig. 19

```
                    ┌─────────────────┐
                    │      START      │
                    └─────────────────┘
                             │
                             ▼
┌──────────────────────────────────────────────────┐
│ DECRYPTION DEVICE GENERATES SECRET KEY sk          │      S2101
│ AND PUBLIC KEY pk                                  │
└──────────────────────────────────────────────────┘
                             │
                             ▼
┌──────────────────────────────────────────────────┐
│ DECRYPTION DEVICE STORES SECRET KEY sk AND         │      S2102
│ TRANSMITS PUBLIC KEY pk                            │
└──────────────────────────────────────────────────┘
                             │
                             ▼
┌──────────────────────────────────────────────────┐
│ CERTIFICATION DEVICE AND AUTHENTICATION            │      S2103
│ DEVICE RECEIVE AND STORE PUBLIC KEY pk             │
└──────────────────────────────────────────────────┘
                             │
                             ▼
                    ┌─────────────────┐
                    │       END       │
                    └─────────────────┘
```

# Fig. 20

```
                        ┌─────────────┐
                        │    START    │
                        └──────┬──────┘
                               │
                               ▼
   ┌──────────────────────────────────────────────┐
   │ CERTIFICATION DEVICE EXTRACTS BIOMETRIC        │      S2201
   │ INFORMATION OF USER                            │
   └──────────────────────┬─────────────────────────┘
                          │
                          ▼
   ┌──────────────────────────────────────────────┐
   │ CERTIFICATION DEVICE GENERATES FEATURE         │      S2202
   │ VECTOR b                                       │
   └──────────────────────┬─────────────────────────┘
                          │
                          ▼
   ┌──────────────────────────────────────────────┐
   │ USING PUBLIC KEY pk AND RANDOM NUMBER,         │      S2203
   │ CERTIFICATION DEVICE  ENCRYPTS FEATURE         │
   │ VECTOR b                                       │
   └──────────────────────┬─────────────────────────┘
                          │
                          ▼
   ┌──────────────────────────────────────────────┐
   │ CERTIFICATION DEVICE TRANSMITS ENCRYPTED       │      S2204
   │ FEATURE VECTOR C                               │
   └──────────────────────┬─────────────────────────┘
                          │
                          ▼
   ┌──────────────────────────────────────────────┐
   │ AUTHENTICATION DEVICE RECEIVES AND STORES      │      S2205
   │ ENCRYPTED  FEATURE VECTOR C                    │
   └──────────────────────┬─────────────────────────┘
                          │
                          ▼
                   ┌─────────────┐
                   │     END     │
                   └─────────────┘
```

# Fig. 21

```
                    START
                      │
                      ▼
┌─────────────────────────────────────────┐
│ CERTIFICATION DEVICE EXTRACTS BIOMETRIC  │      S2301
│ INFORMATION OF USER                      │
└─────────────────────────────────────────┘
                      │
                      ▼
┌─────────────────────────────────────────┐
│ CERTIFICATION DEVICE GENERATES FEATURE   │      S2302
│ VECTOR b′                                │
└─────────────────────────────────────────┘
                      │
                      ▼
┌─────────────────────────────────────────┐
│ USING PUBLIC KEY pk AND RANDOM NUMBER,   │      S2303
│ CERTIFICATION DEVICE ENCRYPTS FEATURE    │
│ VECTOR b′                                │
└─────────────────────────────────────────┘
                      │
                      ▼
┌─────────────────────────────────────────┐
│ CERTIFICATION DEVICE TRANSMITS ENCRYPTED │      S2304
│ FEATURE VECTOR C^                        │
└─────────────────────────────────────────┘
                      │
                      ▼
┌─────────────────────────────────────────┐
│ AUTHENTICATION DEVICE RECEIVES ENCRYPTED │      S2305
│ FEATURE VECTOR C^                        │
└─────────────────────────────────────────┘
                      │
                      ▼
                     ( A )
```

# Fig. 22

( A )

AUTHENTICATION DEVICE READS ENCRYPTED FEATURE VECTOR C THAT HAS BEEN STORED — S2401

USING PUBLIC KEY pk AND RANDOM NUMBER, AUTHENTICATION DEVICE GENERATES ENCRYPTED SIMILARITY DEGREE INFORMATION FOR C AND C^ — S2402

AUTHENTICATION DEVICE TRANSMITS ENCRYPTED SIMILARITY DEGREE INFORMATION — S2403

DECRYPTION DEVICE RECEIVES ENCRYPTED SIMILARITY DEGREE INFORMATION — S2404

USING SECRET KEY sk, DECRYPTION DEVICE PERFORMS DECRYPTION PROCESS ON ENCRYPTED SIMILARITY DEGREE INFORMATION AND DERIVES SIMILARITY DEGREE — S2405

DECRYPTION DEVICE TRANSMITS SIMILARITY DEGREE — S2406

AUTHENTICATION DEVICE RECEIVES SIMILARITY DEGREE — S2407

BASED ON SIMILARITY DEGREE, AUTHENTICATION DEVICE PERFORMS IDENTITY AUTHENTICATION OF USER — S2408

END

# Fig. 23

911 CPU

101,102,103

913 ROM

912

914 RAM

920

901

MAGNETIC DISK DRIVE

902 K/B

921

OS

903

922

WINDOW SYSTEM

915 COMM

923

PROGRAMS

904 FDD

924

FILES

905 CDD

906 PRINTER

907 READ DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 11052056 A

- JP 2007293807 A


**Non-patent literature cited in the description**

- **TAKASHI ITO ; NORI MATSUDA.** Homomorphic encryption based countermeasure against active attacks in privacy-preserving biometric authentication. *IEICE Transactions,* 2011, 7-14
- **T. OKAMOTO ; K. TAKASHIMA.** Homomorphic encryption and signatures from vector decomposition. *Pairing 2008, Lecture Notes in Computer Science,* 2008, vol. 5209, 57-74

- **D. BONEH, E.-J. GOH ; K. NISSIM.** Evaluating 2-DNF formulas on ciphertexts. *Theory of Cryptography Conference, Lecture Notes in Computer Science,* 2005, vol. 3378, 325-341
- **C. GENTRY.** Fully homomorphic encryption using ideal lattices. *ACM Symposium on theory of computing,* 2009, 169-178
- **D. FREEMAN ; M. SCOTT ; E. TESKE.** A taxonomy of pairing-friendly elliptic curves. *Journal of Cryptology,* June 2009